# EUROPÄISCHE PATENTSCHRIFT

(11) **EP 2 373 398 B1**
(45) Veröffentlichungstag und Bekanntmachung des Hinweises auf die Patenterteilung: **10.10.2012**
(21) Anmeldenummer: 09804023.1
(22) Anmeldetag: 18.12.2009
(51) Int. Cl.: B01D 46/24, B01D 46/00

(54) **FILTERELEMENT UND DRUCKLUFTFILTER ZUM ABSCHEIDEN VON FREMDSTOFFEN AUS EINEM DRUCKLUFTSTROM**
FILTER ELEMENT AND COMPRESSED AIR FILTER FOR SEPARATING FOREIGN MATTER FROM A COMPRESSED AIR STREAM
ÉLÉMENT FILTRANT ET FILTRE À AIR COMPRIMÉ POUR SÉPARER DES SUBSTANCES ÉTRANGÈRES SE TROUVANT DANS UN COURANT D'AIR COMPRIMÉ

(30) Priorität: 18.12.2008 DE 102008054878
(43) Veröffentlichungstag der Anmeldung: 12.10.2011
(73) Patentinhaber: Kaeser Kompressoren GmbH, 95450 Coburg (DE)
(72) Erfinder: FOERSTER, Andreas, 96487 Dörfles-Esbach (DE); FISCHER, Norbert, 96484 Meeder (DE); FEISTHAUER, Michael, 96484 Meeder (DE)
(74) Vertreter: Isarpatent
(86) Internationale Anmeldenummer: PCT/EP2009/067529
(87) Internationale Veröffentlichungsnummer: WO 2010/070102

(56) Entgegenhaltungen:
- DE-A1- 3 520 139
- DE-A1- 3 541 370
- DE-A1- 10 309 428
- DE-U1-202007 011 389

## Beschreibung

Die vorliegende Erfindung bezieht sich auf ein Filterelement sowie auf einen Druckluftfilter zum Abscheiden von Fremdstoffen aus einem Druckluftstrom.

Obwohl die vorliegende Erfindung auf beliebige Filtersysteme anwendbar ist, werden die vorliegende Erfindung sowie die ihr zugrunde liegende Problematik in Bezug auf einen Druckluftfilter näher erläutert. Jedoch ist der vorliegende Erfindungsgedanke auch beispielsweise auf einen Fluidabscheider oder dergleichen anwendbar.

Übliche Druckluftfilter bestehen im Allgemeinen aus einem zweiteiligen Gehäuse mit einem Gehäusekopf und einer Gehäuseglocke, welche entweder miteinander verschraubt oder mittels einer Überwurfmutter oder Bajonettverschluss miteinander verbunden sind. Der Gehäusekopf besitzt üblicherweise auf einander diametral gegenüberliegenden Seiten einen Zuström- und einen Abströmkanal. Der Zuströmkanal mündet entweder zentral in ein hohlzylindrisches, austauschbares Filterelement, welches in den Gehäusekopf dichtend eingesetzt bzw. eingeschraubt ist oder in den Ringraum zwischen dem Filterelement und dem Filtergehäuse. Dementsprechend geht der Abströmkanal entweder von dem Ringraum oder von dem Inneren des Filterelementes ab, je nachdem, ob das Filterelement von innen nach außen oder von außen nach innen durchströmt werden soll. Die Strömungsrichtung im Filter ist daher im Allgemeinen nach dem Einbau festgelegt und lässt sich in der Einbaulage nicht verändern. Mit der Strömungsrichtung ist gleichzeitig auch das Einsatzgebiet des Filters im Allgemeinen festgelegt. Beim Staubfiltern wird das Filterelement in der Regel von außen und beim Koaleszenzfiltern zum Abscheiden von Druckluftkondensat von innen durchströmt.

Bei den Filterelementen handelt es sich in der Regel um Wartungsteile, welche nach einer gewissen Zeit aufgrund der auftretenden Verschmutzung gewechselt werden müssen. Das Filterelement besteht im Allgemeinen aus einem Elementboden, einem Elementkopf sowie einem Filtermedium, welches mit dem Elementboden und dem Elementkopf zum Bilden eines vorbestimmten Gasströmungspfades durch das Filtermedium hindurch dichtend verbunden, zumeist verklebt ist.

Neben einer dichtenden Verbindung zwischen dem Elementkopf des Filterelementes und dem Gehäusekopf des Filtergehäuses muss auch eine Gehäusedichtung zwischen dem Gehäusekopf und der Gehäuseglocke des Filtergehäuses vorgesehen werden, um das Filtergehäuse nach Zusammenbau druckdicht gegenüber der Umgebung zu verschließen und somit keine Druckluft entweichen zu lassen. Diese Gehäusedichtung ist im Allgemeinen getrennt von dem Filterelement vorgesehen und wird gemäß dem Stand der Technik zumeist als radial wirkende O-Ring-Dichtung in eine O-Ring-Nut in dem Gehäusekopf oder in der Gehäuseglocke des Filtergehäuses eingelegt.

Die Druckschrift EP 1 343 574 B1 beschreibt einen Druckluftfilter, bei welchem eine Abdichtung zwischen dem Gehäusekopf und der Gehäuseglocke des Filtergehäuses mittels einer radialen O-Ring-Dichtung realisiert wird. Die O-Ring-Dichtung ist in einer entsprechenden radialen Nut in der Gehäuseglocke eingelegt und liegt an einer zugeordneten zylindrischen Mantelfläche des Gehäusekopfes in der Schließstellung zum Gewährleisten einer radialen Abdichtung radial dichtend an.

Bei Verwendung einer derartigen, in der EP 1 343 574 B1 beschriebenen radialen Abdichtung muss zumindest in der Schlussphase des Schließvorgangs eine erhebliche Reibkraft bzw. ein erhebliches Reibmoment infolge des radial vorgesehenen O-Rings nachteilig überwunden werden. Beim Öffnungsvorgang zur Entnahme des Filterelementes muss bei derartigen Konstruktionen mit radialer Abdichtung ebenfalls nachteilig die Reibung des O-Rings, welcher durch den langfristig anstehenden Innendruck im Filtergehäuse deformiert und in die Oberflächenrauhigkeiten eingepresst ist, überwunden werden, wodurch große Betätigungskräfte bzw. Drehmomente erforderlich sind, insbesondere bei größeren Gehäuseglockendurchmessern. Besonders zu Beginn des Öffnungsvorgangs müssen erhebliche Losbrechkräfte bzw. ein erhebliches Losbrechmoment aufgewendet werden, welche deutlich über der Montagekraft bzw. dem Montagemoment liegen. Ab einer bestimmten Gehäusegröße ist folglich die Montage und insbesondere die Demontage eines Filterelementes in das bzw. aus dem Filtergehäuse in der Regel nicht mehr manuell, sondern nachteilig lediglich unter Zuhilfenahme eines zusätzlichen Werkzeuges realisierbar.

Die Druckschrift DE 103 09 428 B4 beschreibt einen Druckluftfilter, bei welchem sich mehrere Gehäusedichtungen stirnseitig zwischen der Gehäuseglocke und dem Gehäusekopf des Filtergehäuses befinden.

Eine derartige Konstruktion benötigt zur Unterbringung der Dichtung bei gleichbleibendem Innendurchmesser der Gehäuseglocke einen größeren Durchmesser von Gehäuseglocke und Gehäusekopf im Dichtungsbereich derart, dass größere druckbeaufschlagte Flächen und Kräfte im Gegensatz zu radialen Abdichtungen entstehen. Es ist zur Montagevereinfachung oder zur Verhinderung von Beschädigungen an den Dichtungen während des Montagevorgangs nachteilig erforderlich, eine Drehbewegung der Dichtflächen der Gehäuseglocke gegenüber den Dichtflächen des Gehäusekopfes bei dem Schließvorgang zu vermeiden. Folglich kann kein einfaches Verschlussgewinde zwischen Gehäusekopf und Gehäuseglocke verwendet werden. Stattdessen müssen aufwändigere Lösungen realisiert werden, beispielsweise in Form einer Überwurfmutter, mit welcher die Gehäuseglocke gegen den Gehäusekopf gezogen wird, wie beispielsweise in der DE 103 09 428 B4 oder der DE 35 41 370 beschrieben.

Ein weiteres Problem derartiger axial angeordneter Dichtungen stellt die Befestigung der Dichtung an dem Elementkopf dar. Axial wirkende O-Ringe können nicht ohne Weiteres formschlüssig an dem Elementkopf gehalten werden. Stoffschlüssige Dichtungen, wie beispielsweise im Herstellungsprozess angespritzte Elastomerdichtungen, können wiederum Probleme bezüglich der Dichtfunktion aufweisen, da im Gegensatz zu einer O-Ring-Dichtung kein Anlegen der Dichtung in den Dichtspalt infolge der Druckdifferenz stattfindet. Daher kann es durchaus vorkommen, dass sich durch Kriech- bzw. Setzungserscheinungen des Dichtmaterials die Montagevorspannung im Laufe der Zeit abbaut und die Abdichtung nicht mehr zuverlässig funktioniert.

Sonderdichtungen in Form einer den Kragen des Elementkopfes U-förmig umgreifenden Dichtung, wie beispielsweise in der Druckschrift US 4,721,563 beschrieben, benötigen nachteilig relativ viel Bauraum und einen hohen Bauaufwand und können für den Fall, dass keine definierte Montagevorspannung aufrecht erhalten werden kann bzw. kein Anlegen der Dichtung an den Dichtspalt infolge des Differenzdrucks zustande kommt, in ungewünschter Weise undicht werden.

Beim Ausbau der verschmutzten Filterelemente besteht ein weiterer Nachteil vieler bekannter Filterkonstruktionen darin, dass das Filterelement nicht axial in der Gehäuseglocke gehalten wird, sondern nach Lösen der Gehäuseglocke weiterhin mit dem Gehäusekopf verbunden bleibt bzw. von der Dichtung zwischen dem Elementkopf und dem Gehäusekopf gehalten wird. Daher muss in einem derartigen Fall zum Ausbau des Filterelementes im Allgemeinen entweder die Gehäuseglocke axial über die gesamte Länge des Filterelementes abgezogen werden oder das Filterelement muss bei teilweise abgezogener Gehäuseglocke durch den Spalt zwischen dem Gehäusekopf und der Gehäuseglocke von Hand gelöst werden. Im ersten Fall ist der Platzbedarf und im zweiten Fall der Kontakt mit dem verschmutzten Filterelement nachteilig und die Handhabung für den Benutzer äußerst kompliziert, weil ein gleichzeitiges Halten der Gehäuseglocke und Lösen des Filterelementes erforderlich sind.

Ein weiterer Nachteil einiger bekannter Filterkonstruktionen mit an dem Elementkopf angebrachter Gehäusedichtung besteht darin, dass eine Abstützung des Filterelementes in axialer Richtung gegenüber dem Filtergehäuse über die Gehäusedichtung erfolgt. Infolge wechselnder Mediendurchströmung des Filterelementes wirken wechselnde Differenzdrücke und somit wechselnde axiale Kräfte auf die Gehäusedichtung, wodurch diese beschädigt und ebenfalls in ihrer Dichtfunktion beeinträchtigt werden kann. Gleiches kann durch Setzung der Dichtung unter über einen langen Zeitraum einwirkenden Differenzdrücken bzw. Axialkräften auftreten.

Zur Lösung dieses Problems ist im Stand der Technik, beispielsweise in der Druckschrift US 4,721,563, eine axiale Abstützung des Filterelementes am Elementboden vorgesehen. Dies ist allerdings aufgrund von Längentoleranzen des Filterelementes, des Gehäusekopfes und der Gehäuseglocke für die Funktion der Gehäuseabdichtung nachteilig.

Es liegt nun der vorliegenden Erfindung die Aufgabe zugrunde, die obengenannten Nachteile zu beseitigen und ein gegenüber dem Stand der Technik verbessertes Filterelement sowie einen gegenüber dem Stand der Technik verbesserten Druckluftfilter bereitzustellen.

Diese Aufgabe wird erfindungsgemäß durch ein Filterelement mit den Merkmalen des Patentanspruchs 1 bzw. des Patentanspruchs 47 sowie durch einen Druckluftfilter mit den Merkmalen des Patentanspruchs 23 bzw. 53 gelöst.

Die der vorliegenden Erfindung zugrundeliegende Idee besteht darin, ein Filterelement zum Abscheiden von Fremdstoffen aus einem Druckluftstrom bereitzustellen, welches einen Elementboden; einen Elementkopf, welcher einen einen ersten Strömungskanal bildenden Halsabschnitt und einen Kragenabschnitt aufweist, der den Halsabschnitt zumindest abschnittsweise umlaufend ausgebildet und unter Bildung eines zweiten Strömungskanals mit dem Halsabschnitt verbunden ist; und ein Filtermedium aufweist, welches mit dem Elementboden und dem Elementkopf zum Bilden eines Gasströmungspfades zwischen dem ersten Strömungskanal und dem zweiten Strömungskanal durch das Filtermedium hindurch dichtend verbunden ist; wobei der Kragenabschnitt eine zumindest abschnittsweise außenumfänglich vorgesehene und sich in Richtung des Elementbodens verjüngende Anlagefläche zur Aufnahme eines zugeordneten Dichtelements derart aufweist, dass eine in etwa axial aus Richtung des Elementbodens auf das Dichtelement wirkende Kraft eine radiale Aufweitung des Dichtelements entlang der Anlagefläche bewirkt.

Ferner liegt der vorliegenden Erfindung in diesem Zusammenhang die Idee zugrunde, einen Druckluftfilter zum Abscheiden von Fremdstoffen aus einem Druckluftstrom zu schaffen, welcher das oben beschriebene, erfindungsgemäße Filterelement; und ein das Filterelement dichtend aufnehmendes Filtergehäuse aufweist, welches einen Gehäusekopf mit einer dem Dichtelement des Filterelementes zugeordneten, zumindest abschnittsweise innenumfänglich vorgesehenen ersten Dichtfläche und eine Gehäuseglocke mit einer dem Dichtelement des Filterelementes zugeordneten, zumindest abschnittsweise stirnseitig vorgesehenen zweiten Dichtfläche aufweist; wobei die Gehäuseglocke mittels einer Schließbewegung des Filtergehäuses mit dem Gehäusekopf zum Bilden einer dichtenden Schließstellung verbindbar ist; und wobei das Filterelement derart mit dem Gehäusekopf und der Gehäuseglocke koppelbar ist, dass die Schließbewegung des Filtergehäuses eine in etwa axial aufeinander zu gerichtete Relativbewegung zwischen dem Kragenab-schnitt des Filterelementes und der Gehäuseglocke bewirkt, wodurch die zweite Dichtfläche der Gehäuseglocke das Dichtelement entlang der Anlagefläche des Kragens des Filterelementes in dichtende Anlage mit der ersten Dichtfläche des Gehäusekopfes radial aufweitet.

Ferner besteht eine der vorliegende Erfindung zugrunde liegende weitere Idee darin, ein Filterelement zum Abscheiden von Fremdstoffen aus einem Druckluftstrom bereitzustellen, welches einen Elementboden; einen Elementkopf, welcher einen einen ersten Strömungskanal bildenden Halsabschnitt und einen Kragenabschnitt aufweist, der den Halsabschnitt zumindest abschnittsweise umlaufend ausgebildet und unter Bildung eines zweiten Strömungskanals mit dem Halsabschnitt verbunden ist; und ein Filtermedium aufweist, welches mit dem Elementboden und dem Elementkopf zum Bilden eines Gasströmungspfades zwischen dem ersten Strömungskanal und dem zweiten Strömungskanal durch das Filtermedium hindurch dichtend verbunden ist; wobei der Kragenabschnitt einen zumindest abschnittsweise außenumfänglich vorgesehenen Dichtelement-Aufnahmeabschnitt, mindestens einen Verbindungskanal zwischen einem der beiden Strömungskanäle und dem Dichtelement-Aufnahmeabschnitt und den Dichtelement-Aufnahmeabschnitt axial begrenzende Dichtelement-Befestigungsabschnitte zur festen und dichtenden Aufnahme von Randabschnitten eines zugeordneten Dichtelementes derart aufweist, dass ein durch den mindestens einen Verbindungskanal zugeführter, auf das Dichtelement wirkender Überdruck eine zur Außenseite hin gerichtete Aufweitung des Dichtelementes im Bereich des Dichtelement-Aufnahmeabschnitts bewirkt.

Entsprechend liegt der vorliegenden Erfindung ferner die weitere Idee zugrunde, einen Druckluftfilter zum Abscheiden von Fremdstoffen aus einem Druckluftstrom bereitzustellen, welcher das obengenannte Filterelement; und ein das Filterelement dichtend aufnehmendes Filtergehäuse aufweist, welches einen Gehäusekopf mit einer dem Dichtelement des Filterelementes zugeordneten, zumindest abschnittsweise innenumfänglich vorgesehenen ersten Dichtfläche und eine Gehäuseglocke mit einer dem Dichtelement des Filterelementes zugeordneten, zumindest abschnittsweise stirnseitig vorgesehenen zweiten Dichtfläche aufweist; wobei das Filterelement derart mit dem Gehäusekopf und der Gehäuseglocke koppelbar ist, dass sich das Dichtelement in der Schließstellung des Filtergehäuses bei Auftreten eines Überdrucks durch den mindestens einen Verbindungskanal hindurch im Bereich des Dichtelement-Aufnahmeabschnitts in dichtende Anlage mit der ersten Dichtfläche des Gehäusekopfes sowie in dichtende Anlage mit der zweiten Dichtfläche der Gehäuseglocke aufweitet.

Den oben genannten Erfindungsideen ist gemeinsam, dass aufgrund einer speziellen Ausgestaltung und Anordnung des Dichtelementes am Kragenabschnitt des Filterelementes sowie einer speziellen Kopplungsweise des Gehäusekopfes, der Gehäuseglocke und des Filterelementes untereinander vorteilhaft keine relevanten Reibungskräfte zwischen dem Dichtelement und den entsprechenden Dichtflächen auftreten, bis die endgültige Schließstellung erreicht ist bzw. der Druckluftfilter mit Druckluft beaufschlagt wird.

Somit weist die vorliegende Erfindung gegenüber den bekannten Ansätzen gemäß dem Stand der Technik den Vorteil auf, dass lediglich geringe Montagekräfte beim Öffnen bzw. Schließen des Filtergehäuses vor bzw. nach einem Wechsel des Filterelementes notwendig sind. Die Gehäuseglocke kann zudem zusammen mit dem Filterelement mit einer geringen Montagekraft in den Gehäusekopf eingesetzt werden, da lediglich am Schluss der Gehäuseschließbewegung nennenswerte Reibungskräfte zwischen dem Dichtelement und der Anlagefläche an dem Kragenabschnitt sowie den Dichtflächen an dem Gehäusekopf und der Gehäuseglocke zu überwinden sind bzw. eine Anlage des Dichtelementes an die entsprechend zugeordneten Dichtflächen erst bei Beaufschlagung des Druckluftfilters mit Druckluft erfolgt, wodurch nahezu keinerlei Reibungskräfte überwunden werden müssen.

Des Weiteren kann das Filterelement vorteilhaft zusammen mit der Gehäuseglocke montiert bzw. demontiert werden, wodurch die Handhabung erheblich erleichtert wird. Ferner wird dadurch der Platzbedarf für das Schließen bzw. Öffnen der Gehäuseglocke nach unten bei einem etwaigen Austausch des Filterelementes vorteilhaft reduziert.

Außerdem wird bei einer Entnahme des Filterelementes zusammen mit der Gehäuseglocke beim Öffnen des Filtergehäuses ein direkter Handkontakt des Benutzers mit dem verschmutzten Filterelement durch eine einfache und leicht lösbare Verriegelung, wie beispielsweise einer formschlüssigen Verbindung zwischen dem Elementkopf und der Gehäuseglocke, vorteilhaft gewährleistet. Zudem wird eine Vereinfachung der Handhabung erreicht, da lediglich ein Bauteil, nämlich die Gehäuseglocke mit darin fixiertem Filterelement, einzusetzen ist. Dies kann folglich beidhändig geschehen, was bei den zum Teil hohen Gewichten größerer Gehäuseglocken in vorteilhafter Weise eine erhebliche Erleichterung darstellt.

Des Weiteren wird aufgrund des Vorsehens der Gehäusedichtung an dem Filterelement bei jedem Wechsel des Filterelementes die entsprechende Gehäusedichtung automatisch mit ausgetauscht, was etwaige Undichtheiten infolge verschlissener Dichtungen vorteilhaft verhindert.

Aufgrund der obengenannten Ausgestaltungen kann auch das Fehlen eines Filterelementes durch eine daraus resultierende ungefährliche aber auffällige Undichtheit des Filtergehäuses leicht, insbesondere akustisch und/oder haptisch, erkannt werden.

Die vorliegende Erfindung schafft außerdem den Vorteil, dass eine sichere und einfache Gehäuseabdichtung mittels eines Dichtelementes bewerkstelligt wird, welches durch den Differenzdruck zuverlässig an dem Gehäusedichtspalt angepresst wird derart, dass die Abdichtung nicht durch Setzungserscheinungen der Dichtung beeinträchtigt werden kann.

Ferner ist bei den obengenannten Erfindungsideen die Verwendung lediglich eines Dichtelementes für die Abdichtung zwischen dem Gehäusekopf und der Gehäuseglocke erforderlich, wodurch die Anzahl der notwendigen Bauteile vorteilhaft reduziert wird.

Des Weiteren wird aufgrund der Kopplungsweise des Filterelementes an der Filterglocke eine axiale Lagerung des Filterelementes im Bereich des Elementkopfes an der Gehäuseglocke gewährleistet, was gegenüber einer axialen Lagerung des Filterelementes an dem Elementboden gemäß einem oben genannten Ansatz nach dem Stand der Technik geringere Anforderungen an die einzuhaltenden Längentoleranzen des Filterelementes stellt. Alle für den Einbau wesentlichen und kritischen Maße liegen bei den erfindungsgemäß vorgeschlagenen Bauweisen lediglich in dem Elementkopf.

Im Folgenden werden vorteilhafte Ausgestaltungen und Verbesserungen in Unteransprüchen des im Patentanspruch 1 angegebenen Filterelementes sowie des im Patentanspruch 23 angegebenen Druckluftfilters erläutert.

Gemäß einer bevorzugten Weiterbildung ist der Kragenabschnitt als den Halsabschnitt vollumfänglich umlaufend und im Wesentlichen zur Mittelachse des Filterelementes rotationssymmetrisch ausgebildet. Die Anlagefläche des Kragenabschnitts ist vorzugsweise ebenfalls vollumfänglich vorgesehen und im Wesentlichen ebenfalls zur Mittelachse des Filterelementes rotationssymmetrisch ausgestaltet. Dadurch kann ein einfaches und kostengünstiges Spritzgussverfahren vorteilhaft zur Herstellung des Elementkopfes verwendet werden.

Nach einer weiteren vorteilhaften Ausgestaltung ist die Anlagefläche des Kragenabschnitts als Konusfläche ausgebildet, deren Steigungs- bzw. Konuswinkel α zwischen der Anlagefläche und der Mittelachse des Filterelements vorzugsweise zwischen 25° und 65° liegt. Es ist jedoch für einen Fachmann offensichtlich, dass auch andere Ausgestaltungen der Anlagefläche möglich sind, beispielsweise eine sich mit verändernder Steigung und/oder mit vom oben genannten Bereich abweichender Steigung verjüngende Ausgestaltung.

Gemäß einem weiteren bevorzugten Ausführungsbeispiel weist der Kragenabschnitt des Filterelementes eine die Anlagefläche in Richtung des Elementkopfes begrenzende Begrenzungsrippe auf, welche vorzugsweise umlaufend und im Wesentlichen zur Mittelachse des Filterelementes ebenfalls rotationssymmetrisch ausgebildet ist. Auch diese Ausgestaltung ist für ein Herstellungsverfahren mittels Spritzgusstechnik vorteilhaft.

Nach einer weiteren bevorzugten Weiterbildung ist das Dichtelement als Dichtring ausgebildet und mit einer geringen radialen Vorspannung auf dem Kragenabschnitt in einer vorbestimmten Halteposition aufziehbar. Dadurch wird eine Verliersicherung für den Dichtring auch dann gewährleistet, wenn das Filterelement sich im demontierten Zustand befindet.

Gemäß einer weiteren bevorzugten Weiterbildung weist der Dichtring in dieser vorbestimmten Halteposition einen Außendurchmesser auf, der kleiner oder gleich dem Durchmesser der inneren Umfangsfläche bzw. ersten Dichtfläche im Gehäusekopf ist, an der der Dichtring im montierten Zustand dichtend anliegt. Dadurch wird bei der Schließbewegung ein Auftreten von größeren Reibungskräften aufgrund einer etwaigen Anlage des Dichtrings an der zugeordneten Dichtfläche des Gehäusekopfes vorteilhaft vermieden. Die notwendigen Montagekräfte können dadurch für den Benutzer in vorteilhafter Weise eingehalten werden.

Gemäß einem weiteren bevorzugten Ausführungsbeispiel ist der Dichtring als O-Ring mit einem im Wesentlichen kreisförmigen Querschnitt ausgebildet. Folglich können als Dichtring kostengünstige Standardbauteile bzw. Standard-O-Ringe verwendet werden.

Nach einer weiteren bevorzugten Weiterbildung ist die Anlagefläche des Kragenabschnitts zur Aufrechterhaltung einer dauerhaften elastischen Vorspannung des Dichtrings elastisch verformbar bzw. federnd ausgebildet. Hierzu kann die Konusfläche bzw. die Anlagefläche des Kragenabschnitts beispielsweise radial in einzelne federnde Segmente aufgeteilt sein. Dadurch wird eine dauerhaft elastische Vorspannung des Dichtrings gewährleistet, so dass eine etwaige altersbedingte Verringerung der Vorspannkraft des Dichtrings ausgeglichen werden kann.

Gemäß einer weiteren bevorzugten Weiterbildung ist der Kragenabschnitt des Filterelementes mittels mehrerer Rippen mit dem Halsabschnitt fest verbunden, wobei die mehreren Rippen vorzugsweise strömungstechnisch optimiert ausgestaltet sind. Diese Rippen gewährleisten eine feste Verbindung des Kragenabschnitts an dem Halsabschnitt des Filterelementes unter Bildung des zweiten Strömungskanals, welcher sich zwischen dem Halsabschnitt und dem Kragenabschnitt erstreckt und von den einzelnen Rippen durchsetzt wird.

Gemäß einem weiteren bevorzugten Ausführungsbeispiel ist der Halsabschnitt des Filterelementes mit einem von der Kreisform abweichenden Querschnitt ausgestaltet und/oder besitzt eine exzentrische Position relativ zu der Mittelachse des Filterelementes. Der Gehäusekopf weist vorteilhaft entsprechend eine an die Form des Halsabschnitts angepasste Aufnahmekontur zum Bilden einer Verdrehsicherung des Filterelementes relativ zu dem Gehäusekopf in der Schließstellung auf. Dadurch wird bei einem Verdrehen der Gehäuseglocke relativ zu dem Gehäusekopf bei der Schließbewegung des Filtergehäuses auch eine relative Drehbewegung zwischen der Gehäuseglocke und dem Filterelement bewirkt. Es ist für einen Fachmann offensichtlich, dass eine gewünschte Verdrehsicherung insbesondere auch durch eine von der Kreisform abweichende Ausgestaltung des Querschnitts des Halsabschnitts mit zugleich zentrischer Anordnung desselben möglich ist.

Gemäß einer weiteren bevorzugten Weiterbildung weist der Elementkopf, die Gehäuseglocke und/oder der Gehäusekopf mindestens eine optische, akustische und/oder haptische Winkelstellungsanzeigeeinrichtung auf. Dadurch erfolgt auf einfache Weise eine Anzeige an den Benutzer, wann die entsprechend notwendigen Relativstellungen zwischen Gehäuseglocke und Filterelement bzw. Gehäuseglocke und Gehäusekopf erreicht sind. Beispielsweise weist der Kragenabschnitt mindestens eine optische Markierung und/oder eine Rasteinrichtung als haptische Winkelstellungsanzeigeeinrichtung auf. Allerdings ist für einen Fachmann offensichtlich, dass jegliche Art einer Anzeigeeinrichtung möglich ist, welche dem Benutzer vorbestimmte Winkelstellungen der einzelnen Bauteile relativ zueinander indiziert, insbesondere eine gut fühlbare, vorbestimmte Winkelstellung.

Die Gehäuseglocke ist beispielsweise mit dem Gehäusekopf mittels einer Gewinde- und/oder Bajonettverbindung, zum Beispiel mittels einer Bajonettverbindung ohne Steigung, oder desgleichen verbindbar. Dadurch wird eine relative Verdrehung zwischen der Gehäuseglocke und dem Filterelement während der Schließbewegung erzeugt, die aufgrund eines vorgesehenen Gewindeeingriffs dieser beiden Bauteile eine axial aufeinander zu gerichtete Relativbewegung zwischen dem Kragenabschnitt des Filterelementes und der Gehäuseglocke bewirkt.

Gemäß einer bevorzugten Ausgestaltung umfasst der Elementkopf einen dem Elementboden zugewandten, zylindrischen Führungsabschnitt mit einem eine vorbestimmte Steigung aufweisenden Au-βengewinde. Die Gehäuseglocke umfasst vorzugsweise ein mit dem Außengewinde des Elementkopfes korrespondierendes Innengewinde für einen Gewindeeingriff zum Einsetzen des Filter-elementes in die Gehäuseglocke bzw. zum Lösen des Filterelementes von der Gehäuseglocke.

Gemäß einer alternativen Ausführungsform weist der Elementkopf einen dem Elementboden zugewandten, zylindrischen Führungsabschnitt mit mehreren elastisch verformbaren Federzungen auf, deren freien Enden in axialer Richtung dem Halsabschnitt zugewandt und auf unterschiedlichem axialen Niveau angeordnet sind, und deren radiale Erstreckungen und Ausgestaltungen eine Abstützung des Dichtelementes in einer vorbestimmten Halteposition ermöglichen. Die Gehäuseglocke weist hierbei vorzugsweise ein mit den elastisch verformbaren Federzungen des Elementkopfes korrespondierendes Innengewinde auf. Vorzugsweise ist dieses Innengewinde der Gehäuseglocke als sägezahnartiges Profil ausgebildet. Beispielsweise läuft das Innengewinde der Gehäuseglocke axial in Richtung der zweiten Dichtfläche der Gehäuseglocke aus. Somit kann vorteilhaft bei gegebener Wandstärke der Gehäuseglocke eine breite stirnseitige Dichtfläche der Gehäuseglocke zur Verfügung gestellt und gewährleistet werden, dass das Ausdrehen des Filterelementes aus der Gehäuseglocke möglichst wenige Umdrehungen benötigt.

Bei einer weiteren alternativen Ausführungsform weist der Kragenabschnitt einen axialen Anschlagabschnitt für einen axialen Anschlag an einer zugeordneten Anschlagfläche des Gehäusekopfes des Filtergehäuses auf. Vorzugsweise ist hierbei die Gehäuseglocke mittels einer Bajonettverbindung mit vorbestimmter Steigung mit dem Gehäusekopf verbindbar. Das Filterelement ist gemäß diesem Ausführungsbeispiel vorzugsweise derart mit dem Gehäusekopf und der Gehäuseglocke koppelbar, dass die Schließbewegung des Filtergehäuses den axialen Anschlagabschnitt des Kragenabschnitts des Filterelementes in Anlage mit der zugeordneten Anschlagfläche des Gehäusekopfes für eine in etwa axial aufeinander zu gerichtete Relativbewegung zwischen dem Kragenabschnitt des Filterelementes und der Gehäuseglocke drängt.

Gemäß einer weiteren bevorzugten Ausgestaltung ist zudem zwischen dem Filterelement und der Gehäuseglocke ein entsprechender Anschlag für eine axiale Abstützung des Filterelementes gegen Bewegungen in Richtung der Gehäuseglocke vorgesehen, vorzugsweise in Form eines entsprechenden Absatzes an dem Filterelement und/oder der Gehäuseglocke. Dadurch kann der Dichtring zwar einerseits durch axiales Eindrücken des Filterelementes in die Gehäuseglocke entsprechend vorgespannt werden, jedoch vorteilhaft nicht vollständig deformiert werden, da der Dichtring sich nicht im Hauptkraftfluss zwischen der Gehäuseglocke und dem Filterelement befindet.

Gemäß einer weiteren bevorzugten Weiterbildung weist der Kragenabschnitt des Filterelementes mindestens eine Rasteinrichtung und die Gehäuseglocke an der Innenwandung mindestens eine zugeordnete, korrespondierende Gegenrasteinrichtung für eine Rastverbindung mit der mindestens einen Rasteinrichtung des Kragenabschnitts auf, so dass das Filterelement bei der Demontage der Gehäuseglocke von dem Gehäusekopf durch diese Rastverbindung in der Gehäuseglocke vorteilhaft zurückgehalten wird. Beispielsweise weist die mindestens eine Rasteinrichtung des Kragenabschnitts mehrere, umfänglich verteilte Schnapper auf, welche als in radialer Richtung federnde Fortsätze des Kragenabschnitts in Richtung des Elementbodens ausgebildet sind und jeweils einen Aufnahmebereich für eine Rastaufnahme der jeweils zugeordneten Gegenrasteinrichtung der Gehäuseglocke aufweisen. Die Gegenrasteinrichtung der Gehäuseglocke ist beispielsweise in Form mehrerer Rastnasen ausgestaltet, welche an der Innenwandung der Gehäuseglocke derart vorgesehen sind, dass sie mit den jeweils zugeordneten Schnappern bei der Offenstellung der Bajonettverbindung in Eingriff bringbar sind. Die Schnapper der Rasteinrichtung des Kragenabschnitts des Filterelementes weisen jeweils zumindest einen vorbestimmten Außenrand auf, welcher zum Liefern einer relativ flachen Gleitrampe entsprechend abgeschrägt ist. In diesem Zusammenhang ist zumindest ein seitlicher Rand der Aufnahmebereiche der Schnapper zum Liefern einer relativ steilen Gleitrampe relativ zu den Gleitrampen der seitlichen Außenränder der Schnapper gesehen jeweils entsprechend abgeschrägt. Durch diese relativ flachen Abschrägungen an den äußeren Seitenrändern der Schnapper gegenüber steileren Abschrägungen der seitlichen Ränder der Schnapperaufnahmebereiche kann bewirkt werden, dass der Kraftaufwand, mit dem die Schnapper mit den Rastnasen in Eingriff gebracht werden, kleiner ist als der Kraftaufwand, mit dem die Schnapper wieder von den Rastnasen getrennt werden. Hierdurch lässt sich vorteilhaft eine gut fühlbare Vorzugswinkelstellung des Filterelementes in der Gehäuseglocke in der Raststellung gewährleisten.

Vorzugsweise sind die Schnapper derart ausgebildet, dass sie während der Rastverbindung mit der zugeordneten Gegenrasteinrichtung als auch während der Ruheposition, in welcher sich die Schnapper außer Eingriff mit der zugeordneten Rasteinrichtung befinden, einen radial undeformierten Zustand einnehmen. Da der Elementkopf und die Schnapper vorteilhaft als einteiliges Spritzgussteil aus Kunststoff hergestellt sind, welcher folglich unter aufgeprägten Deformationen bzw. Vorspannungen Kriecherscheinungen zeigt. Somit wäre die elastische Rückfederung derartiger Kunststoffschnapper, die lange Zeit in einem montierten Zustand eines Filtergehäuses unter Vorspannung stehen bzw. dauerhaft deformiert werden, durch Kriecherscheinungen des Kunststoffmaterials gefährdet. Durch die oben genannte Ausgestaltung kann vorteilhaft gewährleistet werden, dass eine derartige dauerhafte Vorspannung bzw. Deformation vermieden wird.

Im Folgenden werden vorteilhafte Ausgestaltungen und Verbesserungen in Unteransprüchen des im Patentanspruch 47 angegebenen Filterelementes sowie des im Patentanspruch 53 angegebenen Druckluftfilters erläutert.

Gemäß einer bevorzugten Weiterbildung ist das Dichtelement als Dichtring und insbesondere als umlaufende, ringförmige Sonderformdichtung ausgebildet, welche unter einer geringen radialen Vorspannung in eine entsprechend umlaufende Vertiefung im Kragenabschnitt des Elementkopfes eingelegt werden kann. Dazu weist der Kragenabschnitt vorzugsweise zwei Dichtring-Befestigungsabschnitte auf, welche jeweils in Form einer den Kragenabschnitt umlaufenden Aufnahmerille zur festen Aufnahme der Randabschnitte des Dichtrings unter geringer radialer Vorspannung ausgebildet sind.

Gemäß einem weiteren bevorzugten Ausführungsbeispiel weist der Kragenabschnitt mehrere Bohrungen als Verbindungskanäle zwischen dem zweiten Strömungskanal und dem Dichtring-Aufnahmeabschnitt auf. Der Kragenabschnitt weist insbesondere einen Anschlagabschnitt auf, welcher für einen axialen Anschlag in vorbestimmter Weise mit einer zugeordneten Anlagefläche der Gehäuseglocke in Anlage bringbar ist. Vorzugsweise ist im Bereich des Dichtring-Aufnahmeabschnitts zwischen dem Dichtring und dem Kragenabschnitt ein umlaufender oder in mehrere Abschnitte unterteilter Freiraum vorgesehen, welcher mit dem mindestens einen Verbindungskanal in fluidem Strömungskontakt steht. Der Freiraum ist gemäß einer bevorzugten Weiterbildung in etwa diametral des abzudichtenden Raumes zwischen der ersten Dichtfläche des Gehäusekopfes und der zweiten Dichtfläche der Gehäuseglocke auf der gegenüberliegenden Seite des Dichtrings vorgesehen.

Nach einer weiteren bevorzugten Ausgestaltung ist der Dichtring in seinen geometrischen Abmessungen an die Formen der ersten Dichtfläche des Gehäusekopfes und der zweiten Dichtfläche der Gehäuseglocke derart angepasst, dass der Dichtring in den abzudichtenden Raum zwischen der ersten Dichtfläche des Gehäusekopfes und der zweiten Dichtfläche der Gehäuseglocke in der Schließstellung des Filtergehäuses einpassbar ist. Des Weiteren weist der Dichtring vorzugsweise im Bereich seiner Randabschnitte leicht deformierbare Dichtlippen auf, welche in ihren geometrischen Abmessungen derart ausgebildet sind, dass in der Schließstellung des Filtergehäuses die Dichtlippen in dichtende Anlage mit einer zugeordneten inneren Umfangsfläche des Gehäusekopfes und mit einer zugeordneten inneren Umfangsfläche der Gehäuseglocke bringbar sind. Dadurch wird vorteilhaft gewährleistet, dass sich auf der dem Kragenabschnitt zugewandten Rückseite im Wesentlichen der Gehäuseinnendruck einstellt, während sich in dem durch die Dichtlippen zwischen dem Dichtring, dem Gehäusekopf und der Gehäuseglocke gebildeten Raum infolge der Leckagepfade nach außen ein Druck einstellt, der zwischen dem Gehäuseinnendruck und dem Umgebungsdruck liegt und wesentlich niedriger ist, als der Innendruck im Gehäuse. Durch diese Druckdifferenz wird vorteilhaft der zwischen den Dichtlippen liegende Abschnitt der Dichtung zur Anlage an den zugeordneten Dichtflächen von Gehäusekopf und Gehäuseglocke gebracht und somit das Gehäuseinnere gegenüber der Umgebung vorteilhaft abgedichtet.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine Querschnittsansicht eines Druckluftfilters gemäß einem ersten bevorzugten Ausführungsbeispiel der vorliegenden Erfindung;
- Fig. 2.1: eine perspektivische Ansicht eines Elementkopfes des Filterelementes gemäß dem ersten bevorzugten Ausführungsbeispiel der vorliegenden Erfindung;
- Fig. 2.2: eine Seitenansicht des Filterkopfes aus Fig. 2.1;
- Fig. 2.3: eine Draufsicht auf den Filterkopf gemäß den Fig. 2.1 und 2.2;
- Fig. 2.4: eine Teilquerschnittsansicht eines Druckluftfilters gemäß dem ersten bevorzugten Ausführungsbeispiel der vorliegenden Erfindung vor einer Schließbewegung des Filtergehäuses;
- Fig. 2.5: eine vergrößerte Darstellung des Ausschnitts A aus Fig. 2.4;
- Fig. 2.6.: eine Teilquerschnittsansicht eines Druckluftfilters gemäß dem ersten bevorzugten Ausführungsbeispiel der vorliegenden Erfindung nach einer Schließbewegung des Filtergehäuses;
- Fig. 2.7: eine vergrößerte Darstellung des Ausschnitts B aus Fig. 2.6;
- Fig. 3.1: eine perspektivische Ansicht eines Elementkopfes eines Filtergehäuses gemäß einem zweiten bevorzugten Ausführungsbeispiel der vorliegenden Erfindung;
- Fig. 3.2: eine Seitenansicht des Filterkopfes aus Fig. 3.1;
- Fig. 3.3: eine Draufsicht auf den Filterkopf gemäß den Fig. 3.1 und 3.2;
- Fig. 3.4: eine Teilquerschnittsansicht eines Druckluftfilters gemäß dem zweiten bevorzugten Ausführungsbeispiel der vorliegenden Erfindung vor einer Schließbewegung des Filtergehäuses bzw. während einer Schließbewegung des Filtergehäuses;
- Fig. 3.5: eine vergrößerte Darstellung des Ausschnitts C aus Fig. 3.4;
- Fig. 3.6: eine vergrößerte Darstellung des Ausschnitts D aus Fig. 3.4;
- Fig. 3.7: eine Teilquerschnittsansicht eines Druckluftfilters gemäß dem zweiten bevorzugten Ausführungsbeispiel der vorliegenden Erfindung nach einer Schließbewegung des Filtergehäuses;
- Fig. 3.8: eine vergrößerte Darstellung des Ausschnitts E aus Fig. 3.7;
- Fig. 4.1: eine perspektivische Ansicht eines Elementkopfes eines Filterelementes gemäß einem dritten bevorzugten Ausführungsbeispiel der vorliegenden Erfindung;
- Fig. 4.2: eine Seitenansicht des Elementkopfes aus Fig.4.1;
- Fig. 4.3: eine Draufsicht auf den Elementkopf aus den Fig.4.1 und 4.2;
- Fig. 4.4: eine Teilquerschnittsansicht eines Druckluftfilters gemäß dem dritten bevorzugten Ausführungsbeispiel der vorliegenden Erfindung vor einer Schließbewegung des Filtergehäuses;
- Fig. 4.5: eine vergrößerte Darstellung des Ausschnitts F aus Fig. 4.4;
- Fig. 4.6: eine Teilquerschnittsansicht eines Druckluftfilters gemäß dem dritten bevorzugten Ausführungsbeispiel der vorliegenden Erfindung nach einer Schließbewegung des Filtergehäuses;
- Fig. 4.7: eine vergrößerte Darstellung des Ausschnitts G aus Fig. 4.6;
- Fig. 5.1: eine Teilquerschnittsansicht eines Druckluftfilters gemäß einem vierten bevorzugten Ausführungsbeispiel der vorliegenden Erfindung;
- Fig. 5.2: eine vergrößerte Darstellung des Ausschnitts H aus Fig. 5.1 vor einer Druckbeaufschlagung des Dichtelementes; und
- Fig. 5.3: eine vergrößerte Darstellung des Ausschnitts I aus Fig. 5.1 nach Druckbeaufschlagung des Dichtelementes.

In den Figuren der Zeichnung bezeichnen dieselben Bezugszeichen gleiche oder funktionsgleiche Komponenten, soweit nichts Gegenteiliges angegeben ist.

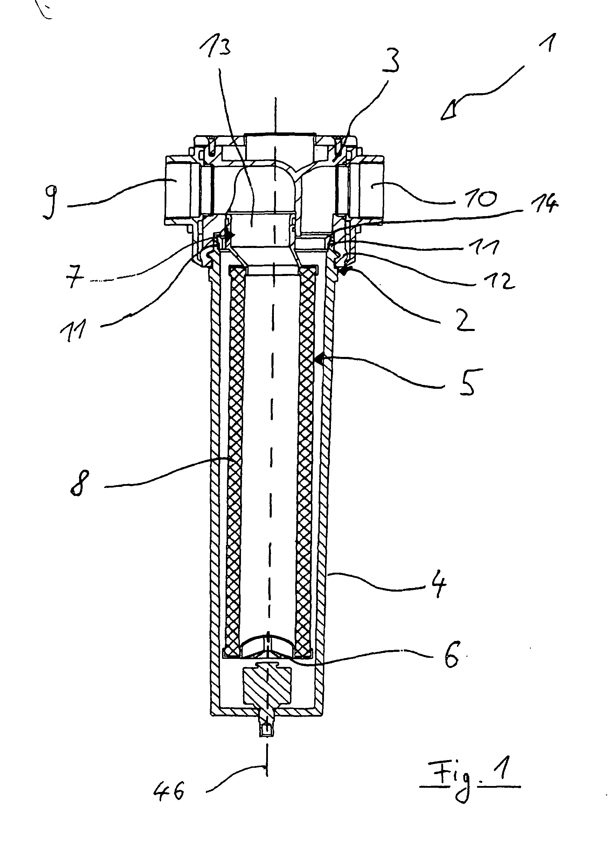

In Fig. 1 ist eine schematische Querschnittsdarstellung eines Druckluftfilters 1 gemäß einem ersten bevorzugten Ausführungsbeispiel der vorliegenden Erfindung illustriert. Wie aus Fig. 1 ersichtlich ist, besitzt der Druckluftfilter 1 ein mehrteiliges Filtergehäuse 2, welches aus einem Gehäusekopf 3 und einer damit fest verbindbaren Gehäuseglocke 4 besteht. Der Gehäusekopf 3 weist einen Zu- bzw. Abströmkanal 9 und einen Ab- bzw. Zuströmkanal 10 sowie entsprechende Anschlüsse für die zu reinigende bzw. gereinigte Druckluft auf.

Der Druckluftfilter 1 umfasst ferner ein in das Filtergehäuse 2 einsetzbares Filterelement 5, welches aus einem Elementboden 6, einem Elementkopf 7 sowie einem Filtermedium 8 besteht und gemäß dem vorliegenden Ausführungsbeispiel vorzugsweise mit Ausnahme eines Halsabschnittes 13 und von Rippen 15 relativ zu seiner Mittelachse 46 rotationssymmetrisch ausgebildet ist. Das Filtermedium ist gemäß Fig. 1 zum Beispiel in Form eines Hohlzylinders gewickelt bzw. plissiert und mit dem Elementkopf 7 sowie dem Elementboden 6 des Filterelementes 5 fest oder lösbar dichtend verbunden, beispielsweise in geeigneter Weise dichtend verklebt. Alternativ kann es sich bei dem Filtermedium 8 auch um eine Schüttung eines granularen Filtermediums, wie beispielsweise Aktivkohle, in einer Trägerkonstruktion oder um einen porösen Hohlkörper handeln.

Das Filterelement 5 ist zudem gemäß dem vorliegenden Ausführungsbeispiel fest mit der Gehäuseglocke 4 verbindbar, wobei gemäß diesem Ausführungsbeispiel, wie in Fig. 1 ersichtlich, eine derartige Verbindung beispielhaft mittels einer Gewindeverbindung 11 realisiert ist.

Ferner ist die Gehäuseglocke 4 über eine Drehverbindung 12 fest mit dem Gehäusekopf 3 in einer Schließstellung dichtend verbindbar. Im eingebauten Zustand bzw. in der Schließstellung trennt das Filterelement 5 im Filtergehäuse 2 die Zuströmseite von der Abströmseite derart, dass die zu filternde Druckluft durch das Filtermedium 8 hindurchströmen muss. Hierzu wird der Elementkopf 7 dichtend in das Filtergehäuse 2 eingesetzt, so dass der Innenraum des hohlzylindrischen angeordneten Filtermediums 8 mit der Zu- oder Abströmseite 9 und der Außenraum des hohlzylindrisch angeordneten Filtermediums 8 mit der Ab- bzw. Zuströmseite 10 des Gehäusekopfes 3 verbunden ist. In der in Fig. 1 dargestellten Ausführungsform strömt die Druckluft in der Schließstellung des Druckluftfilters 1 durch den Zuströmkanal 9 und einen Halsabschnitt 13 des Elementkopfes 7 in das Innere des Filtermediums 8, durch die zylindrische Wandung des Filtermediums 8 für ein Abscheiden von Fremdstoffen aus dem Druckluftstrom hindurch und über den zwischen der Außenwandung des Filtermediums 8 und der Innenwandung der Gehäuseglocke 4 gebildeten Strömungskanal und dem zwischen dem Halsabschnitt 13 und einem damit verbundenen Kragenabschnitt 14 des Elementkopfes 7 des Filterelementes 5 gebildeten Strömungskanal zu dem Abströmkanal 10 des Gehäusekopfes 3. Unter Umständen kann es auch sinnvoll sein, die Strömungsrichtung des Druckluftstromes umgekehrt zu obigem Strömungsverlauf vorzusehen.

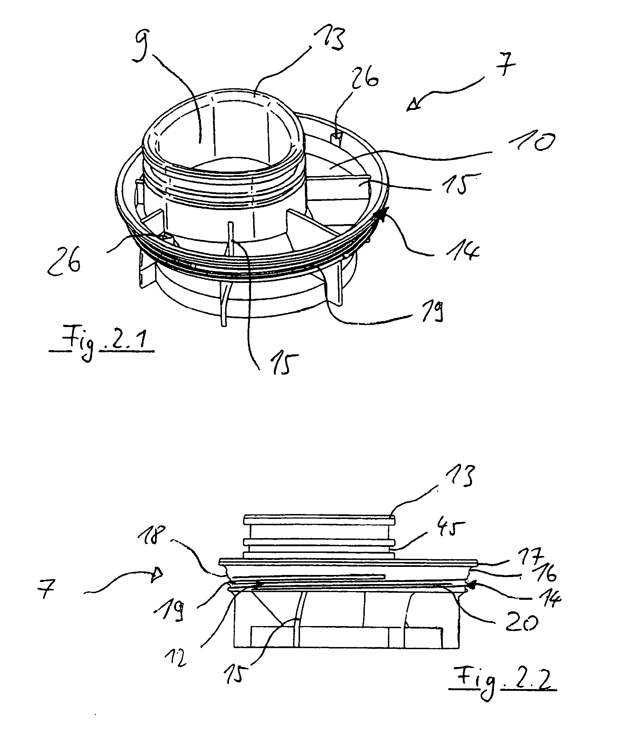

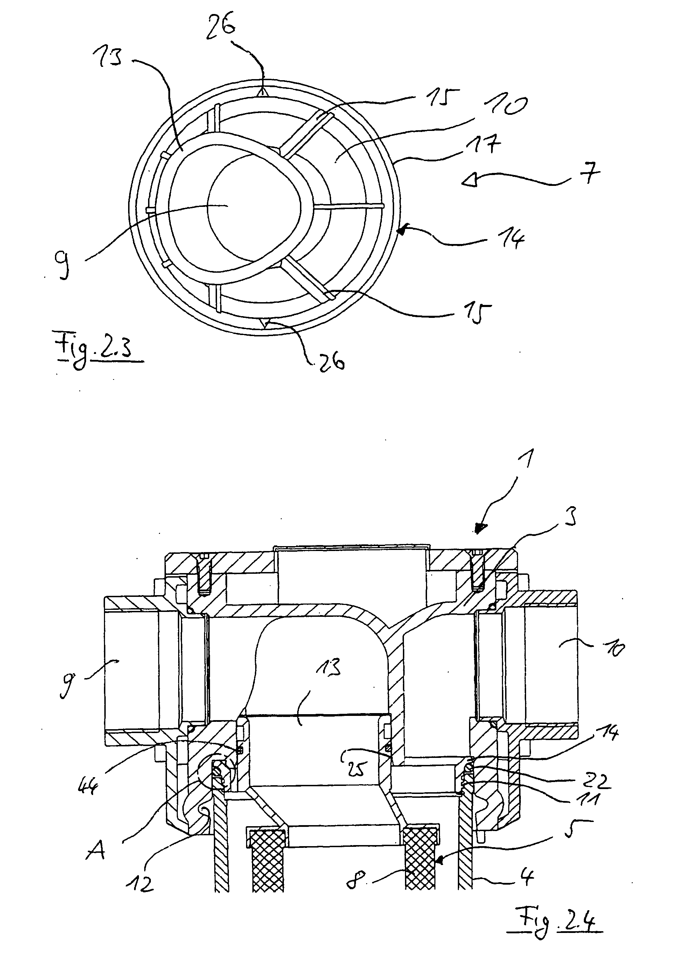

In den Fig. 2.1, 2.2 und 2.3 sind ein Elementkopf 7 des Filterelementes 5 gemäß einem ersten bevorzugten Ausführungsbeispiel der vorliegenden Erfindung in verschiedenen Ansichten und in Fig. 2.4 bis 2.7 Teilquerschnittsansichten eines Druckluftfilters 1 gemäß dem ersten bevorzugten Ausführungsbeispiel der vorliegenden Erfindung vor und nach einer Schließbewegung des Filtergehäuses 2 dargestellt.

Der Elementkopf 7 weist gemäß dem ersten Ausführungsbeispiel einen oben bereits angesprochenen Halsabschnitt 13 auf, welcher eine von der Kreisform abweichende Querschnittsform, beispielsweise eine Form ähnlich einer stark abgerundeten Dreiecksform, besitzt. Zudem ist der Halsabschnitt 13 exzentrisch relativ zu der Mittelachse 46 des Filterelementes 5 positioniert. Der Halsabschnitt 13 bildet einen in Richtung des zugeordneten Gehäusekopfes 3 vorkragenden Abschnitt des Elementkopfes 7 und ist über mehrere Rippen 15 mit dem den Halsabschnitt 13 umlaufenden Kragenabschnitt 14 verbunden. Die Rippen 15 erstrecken sich im Wesentlichen in radialer und gleichzeitig axialer Richtung und weisen zur Verringerung des Differenzdrucks vorzugsweise eine strömungstechnisch optimierte Ausgestaltung auf. Beispielsweise sind einzelne Rippen 15 hierfür mit bestimmten Krümmungen ausgestaltet. Die Rippen 15 ermöglichen eine Strömung der Druckluft in Längsrichtung des Filterelementes 5 zwischen dem Halsabschnitt 13 und dem Kragenabschnitt 14 des Elementkopfes 7 hindurch. Der Kragenabschnitt 14 ist gemäß dem dargestellten ersten Ausführungsbeispiel relativ zu der Mittelachse 46 des Filterelementes 5 rotationssymmetrisch und den angeordneten Halsabschnitt 13 vollumfänglich umlaufend ausgebildet. Der Kragenabschnitt 14 weist vorzugsweise einen Außendurchmesser auf, welcher in etwa dem Außendurchmesser der zugeordneten Stirnseite der Gehäuseglocke 4 entspricht.

Der Halsabschnitt 13 und/oder dessen zugeordnete Aufnahmekontur im Gehäusekopf 3 umfasst zudem eine in einer zugeordneten Nut 45 aufgenommene Dichtung 44, welche einer fluiddichten Verbindung zwischen dem Halsabschnitt 13 und dem entsprechenden Zu- bzw. Abströmkanal 9 im Gehäusekopf 3 dient.

Der Kragenabschnitt 14 umfasst in dem dem Halsabschnitt 13 zugewandten Bereich eine zur Außenseite gerichtete Anlagefläche 16. Die Anlagefläche 16 dient der Aufnahme eines zugeordneten O-Rings 22 und ist im Wesentlichen relativ zu der Mittelachse 46 des Filterelementes 5 rotationssymmetrisch und umlaufend ausgebildet. Der Durchmesser der Anlagefläche 16 verjüngt sich in Richtung auf den Elementboden 6 in vorbestimmter Weise. Beispielsweise ist die Anlagefläche 16 als Konusfläche ausgebildet, deren Mittelachse mit der Mittelachse 46 des Filterelementes 5 zusammenfällt. Die gedachte Spitze des Konus weist in Richtung auf den Elementboden 6 und umfasst eine Steigung im Bereich zwischen 1:2 und 2:1, d.h. einen Steigungswinkel α zwischen der Anlagefläche 16 und der Mittelachse 46 des Filterelements 5 vorzugsweise zwischen in etwa 25° und 65°. Allerdings kann die Anlagefläche 16 auch eine sich stetig oder in bestimmten Abschnitten ändernde Steigung aufweisen.

Die Anlagefläche 16 wird in Richtung des Halsabschnitts 13 durch eine ebenfalls vorzugsweise umlaufende und relativ zu der Mittelachse 46 des Filterelementes 5 rotationssymmetrische Begrenzungsrippe 17 begrenzt. In Richtung des Elementbodens 6 wird die Anlagefläche 16 durch eine umlaufende und zur Mittelachse 46 des Filterelementes 5 rotationssymmetrische Rille 18 begrenzt, welche in Richtung des Elementbodens 6 in einen im Wesentlichen zylindrischen Führungsabschnitt 19 des Kragenabschnitts 14 übergeht, mit welchem der Kragenabschnitt 14 in der Gehäuseglocke 4 aufgenommen und zentriert wird.

Wie beispielsweise in Fig. 2.2 ersichtlich ist, weist der Kragenabschnitt 14 ferner an dem zylindrischen Führungsabschnitt 19 ein Außengewinde 20 auf, welches mit einem entsprechend korrespondierenden Innengewinde 21 der Gehäuseglocke 4 in Gewindeeingriff bringbar ist. Das Filterelement 5 kann über diese Gewindeverbindung 11 in die Gehäuseglocke 4 fest eingeschraubt werden.

Des Weiteren ist ein Dichtring 22 vorgesehen, welcher vorzugsweise als handelsüblicher O-Ring mit einem im Wesentlichen kreisförmigen Querschnitt der Dichtschnur ausgestaltet ist. Der Dichtring 22 ist auf der Anlagefläche 16 vorzugsweise mit einer geringen radialen Vorspannung in einer vorbestimmten Halteposition aufgezogen. Der Außendurchmesser des Dichtrings 22 ist in dieser Halteposition an dem Kragenabschnitt 14 bzw. an der Anlagefläche 16 kleiner oder gleich dem Durchmesser der die erste Dichtfläche 23 in dem Gehäusekopf 3 bildenden inneren Umfangsfläche 23 des Gehäusekopfes 3, an der der Dichtring 22 im montierten Zustand in der Schließstellung dichtend anliegt. Neben der inneren Umfangsfläche 23 des Gehäusekopfes 3 als erste Dichtfläche bildet die Stirnfläche der Gehäuseglocke 4 die zweite Dichtfläche 24 des Filtergehäuses 2, an welche der Dichtring 22 durch eine Schließbewegung des Filtergehäuses 2 und somit in der Schließstellung nach einem weiter unten ausführlich beschriebenen Wirkprinzip elastisch zur Anlage gebracht wird.

Für eine Aufrechterhaltung einer dauerhaft elastischen Vorspannung des Dichtrings 22 kann die Anlagefläche 16 an dem Kragenabschnitt 14 elastisch ausgebildet sein, beispielsweise in Form einzelner, radial aufgeteilter und elastisch federnder Segmente.

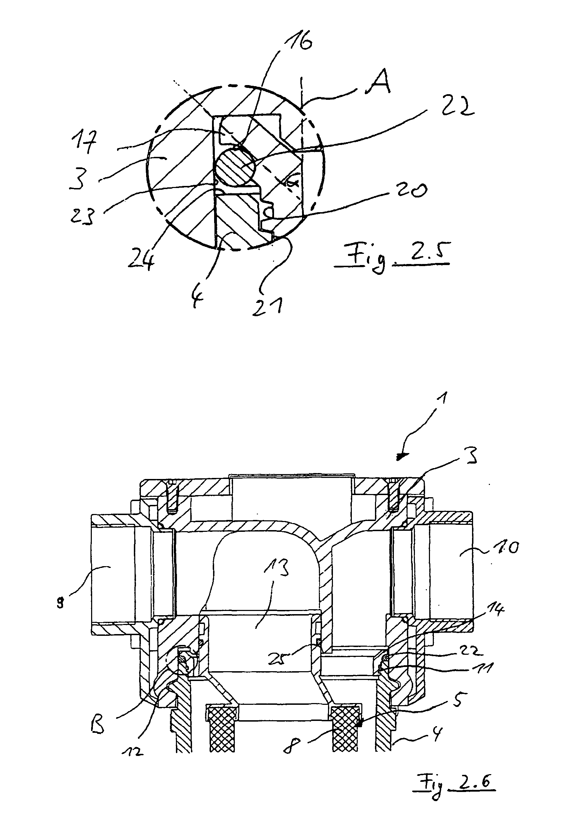

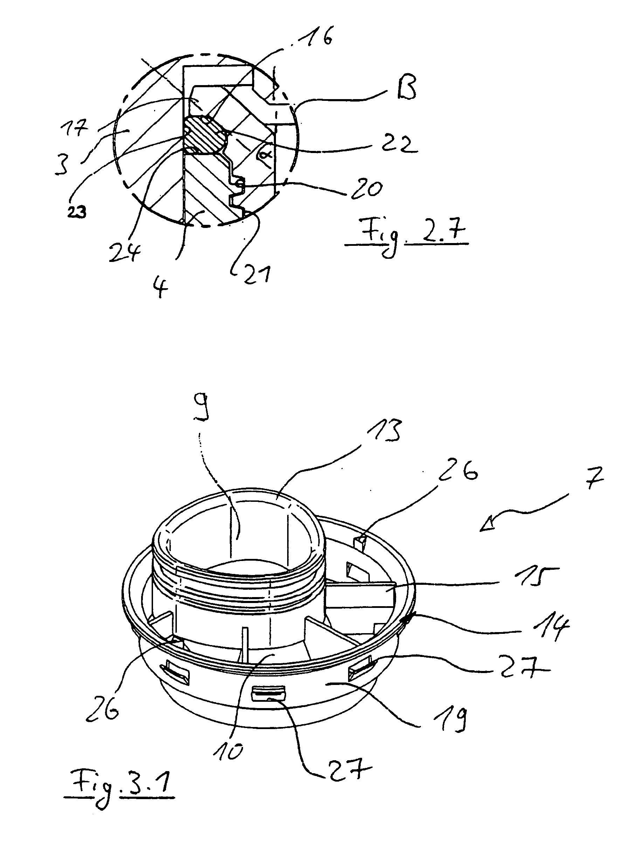

Im Folgenden wird unter Bezugnahme auf die Fig. 2.4 bis 2.7 die abdichtende Wirkungsweise des Filtergehäuses 2 näher erläutert, wobei die Fig. 2.4 und 2.5 einen Zustand vor der Schließbewegung des Filtergehäuses 2 und die Fig. 2.6 und 2.7 einen Zustand nach der Schließbewegung des Filtergehäuses 2 darstellen.

Der Gehäusekopf 3 weist zur Aufnahme des Halsabschnitts 13 des Elementkopfes 7 eine korrespondierende Aufnahmekontur 25 auf, wobei der Halsabschnitt 13 in die Aufnahmekontur 25 zum Liefern einer Verdrehsicherung des Filterelementes 5 um seine Längsachse relativ zu dem Gehäusekopf 3 einsetzbar ist. Es ist für einen Fachmann offensichtlich, dass eine gewünschte Verdrehsicherung insbesondere auch durch eine von der Kreisform abweichende Ausgestaltung des Querschnitts des Halsabschnitts 13 mit zugleich zentrischer Anordnung desselben möglich ist.

Gemäß dem vorliegenden ersten Ausführungsbeispiel ist die Drehverbindung 12 zwischen der Gehäuseglocke 4 und dem Gehäusekopf 3 in Form einer Bajonettverbindung derart ausgestaltet, dass die Montage der Gehäuseglocke 4 an dem Gehäusekopf 3 mit einer Drehbewegung der Gehäuseglocke 4 um ihre Längsachse relativ zu dem Gehäusekopf 3 verbunden ist. Allerdings kann die Drehverbindung 12 auch mittels einer geeigneten Gewindeverbindung oder dergleichen realisiert werden.

Bevorzugt wird beim ersten Ausführungsbeispiel eine Bajonettverbindung ohne Steigung derart verwendet, dass die Schließdrehung zwischen der Gehäuseglocke 4 und dem Gehäusekopf 3 ohne einer axiale Relativbewegung zwischen diesen beiden Bauteilen erfolgt.

Zum Einsetzen des Filterelementes 5 in das Filtergehäuse 2 wird zunächst das Filterelement 5 mittels der Gewindeverbindung 11 bzw. dem Innengewinde 21 und dem Außengewinde 20 soweit in die Gehäuseglocke 4 eingeschraubt, bis der Dichtring 22 lose an der zweiten Dichtfläche 24 bzw. der entsprechenden Stirnfläche der Gehäuseglocke 4 anliegt. In diesem Zustand ist der Dichtring 22 lediglich gering vorgespannt und noch nicht entlang der Anlagefläche 16 aufgeweitet, wie in Fig. 2.5 dargestellt ist. Um dem Benutzer eine für den Zusammenbau erforderliche Winkelposition des Filterelements 5 relativ zu der Gehäuseglocke 4 anzuzeigen, sind vorliegend vorzugsweise geeignete optische Markierungen 26 an dem Elementkopf 7 und/oder an der Gehäuseglocke 4 vorgesehen. Alternativ oder zusätzlich kann die relative Winkelstellung auch durch federnde Rastnasen beispielsweise an dem Kragenabschnitt 14 und durch dazu korrespondierende Gegenkonturen an der Gehäuseglocke 4 als haptische Markierungen dem Benutzer kenntlich gemacht werden.

Durch die entsprechende relative Ausrichtung des Innengewindes 21 an der inneren Gehäusewandung der Gehäuseglocke 4 und des Außengewindes 20 an dem Kragenabschnitt 14 des Elementkopfes 7, des speziell ausgebildeten und positionierten Halsabschnitts 13 sowie der Bajonettverbindung 12 zwischen dem Gehäusekopf 3 und der Gewindeglocke 4 wird gewährleistet, dass der Halsabschnitt 13 des Filterelementes 5 in einer vorbestimmten Winkelposition in die korrespondierende Aufnahmekontur 25 an dem Gehäusekopf 3 verdrehsicher in axialer Richtung eingeführt und folglich die Gehäuseglocke 4 zusammen mit dem an der Gehäuseglocke 4 verschraubten Filterelement 5 in den Gehäusekopf 3 eingeführt und über die Bajonettverbindung 12 mit dem Gehäusekopf 3 in Eingriff gebracht werden kann. Bei einer Schließbewegung des Filtergehäuses 2, d.h. bei einer Verdrehung der Gehäuseglocke 4 relativ zu dem Gehäusekopf 3 wird die Winkelstellung des Filterelementes 5 relativ zu dem Gehäusekopf 3 aufgrund der oben beschriebenen Verdrehsicherung beibehalten, wodurch es jedoch zu einer Relativdrehung zwischen dem Filterelement 5 und der Gehäuseglocke 4 derart kommt, dass das Filterelement 5 weiter in die Gehäuseglocke 4 hineinbewegt wird. Die Steigung der Gewindeverbindung 11, d.h. die Steigung des Außengewindes 20 sowie des Innengewindes 21 bestimmen das Maß der Relativbewegung zwischen dem Filterelement 5 und der Gehäuseglocke 4 bei einem vorbestimmten Drehwinkel der Gehäuseglocke 4 relativ zu dem Gehäusekopf 3.

Folglich wird der Kragenabschnitt 14 des Filterelements 5 bei der Schließbewegung des Filtergehäuses 2 derart weiter in die Gehäuseglocke 4 eingeschraubt, d.h. es erfolgt eine weitergehende aufeinander zugerichtete Relativbewegung zwischen diesen derart, dass die zweite Dichtfläche 24 bzw. die Stirnseite der Gehäuseglocke 4 den Dichtring 22 nach oben entlang der Anlagefläche 16 drängt und eine Aufweitung des Dichtrings 22 über die entsprechend geneigt ausgebildete Anlagefläche 16 bewirkt, wie insbesondere in den Fig. 2.5 und 2.7 illustriert ist. Die Begrenzungsrippe 17 dient einer Begrenzung der Aufweitung des Dichtrings 22 und gewährleistet somit eine definierte und vorbestimmte Aufweitung des Dichtrings 22.

Durch diese radiale Aufweitung des Dichtrings 22 wird dieser während der Schließbewegung des Filtergehäuses 2 neben der Anlage mit der zweiten Dichtfläche 24 auch in dichtende Anlage mit der ersten Dichtfläche 23, d.h. der Innenumfangsfläche des Gehäusekopfes 3 gebracht, wie in Fig. 2.7 dargestellt ist. Somit erfolgt lediglich am Ende der Schließbewegung des Filtergehäuses 2 eine Anlage des Dichtrings 22 mit der ersten Dichtfläche 23, was aus reibungstechnischen Gründen vorteilhaft ist.

An dieser Stelle sei darauf hingewiesen, dass eine radiale Aufweitung des Dichtrings 22 äquivalent auch dadurch bewerkstelligt werden kann, dass der Dichtring 22 anstatt der Führung des Dichtrings 22 entlang der Anlagefläche 16 dadurch radial aufgeweitet wird, dass der Dichtring 22 lediglich durch einen Zusammenpressvorgang aufgrund entsprechender Anlage an einer entsprechend ausgebildeten Anlagefläche 16 entsprechend gequetscht wird und aufgrund dieser Quetschung eine radiale Aufweitung erfährt. Beispielsweise kann hierbei die Anlagefläche 16 als rechtwinklige, eine L-Form aufweisende Anlagefläche oder dergleichen ausgebildet sein. Es ist hier jegliche Form und Art von Anlagefläche 16 möglich, die bei einer axial wirkenden Kraft auf den Dichtring 22 ein Zusammenpressen des Dichtrings 22 derart gewährleistet, dass dieser eine radiale Aufweitung erfährt.

Letztendlich wird die Anlage an die beiden Dichtflächen 23 und 24 bei Druckaufbau in dem Filtergehäuse 2 durch die Druckkraft des Innendrucks auf den Dichtring 22 derart verstärkt, dass die gewünschte vollständige und zuverlässige Abdichtung des Filtergehäuses 2 gewährleistet wird.

Eine axiale Abstützung des Filterelementes 5 an der Gehäuseglocke 4 erfolgt gemäß dem ersten Ausführungsbeispiel über die Gewindeverbindung 11 derart, dass der Dichtring 22 in dem Einbauzustand, in welchem das Filterelement 5 in die Gehäuseglocke 4 eingesetzt ist, zwar elastisch vorgespannt ist, sich jedoch nicht im axialen Hauptkraftfluss zwischen dem Gehäusekopf 3 und der Gehäuseglocke 4 befindet. Dadurch wird die Lebensdauer des Dichtrings 22 vorteilhaft verlängert.

Die Demontage des Druckluftfilters 1 für einen Austausch eines etwaigen verschmutzten Filterelementes 5 erfolgt analog zu dem oben beschriebenen Montageablauf, jedoch in umgekehrter Reihenfolge.

Es ist für einen Fachmann offensichtlich, dass die geometrischen Abmessungen und Formen der einzelnen Teile und Flächen, insbesondere der Dichtflächen, des Dichtrings, der Anlagefläche und der Begrenzungsrippe modifiziert werden können, solange der Dichtring bei der Schließbewegung des Filtergehäuses entlang der Anlagefläche für eine dichtende Anlage mit den Dichtflächen radial aufgeweitet wird. Es sei an dieser Stelle angemerkt, dass im Wege der vorliegenden Anmeldung unter dem Begriff "verjüngende Anlagefläche" jegliche Art von Anlagefläche 16 verstanden werden soll, die den Aufnahmeraum zur Aufnahme des Dichtringes 22 derart festlegt, dass eine axial wirkende Kraft auf den Dichtring 22 eine radiale Aufweitung des Dichtrings bewirkt. Somit soll beispielsweise auch eine L-förmige Anlagefläche oder eine Anlagefläche mit einem spitzen Winkel zwischen zwei Abschnitten der Anlagefläche verstanden werden und im Sinne der vorliegenden Anmeldung als äquivalent zu der in den Figuren dargestellten Anlagefläche 16 angesehen werden.

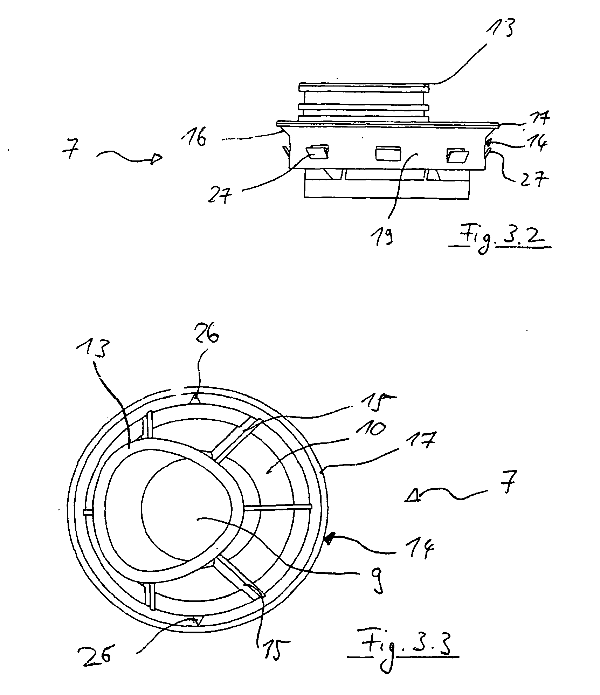

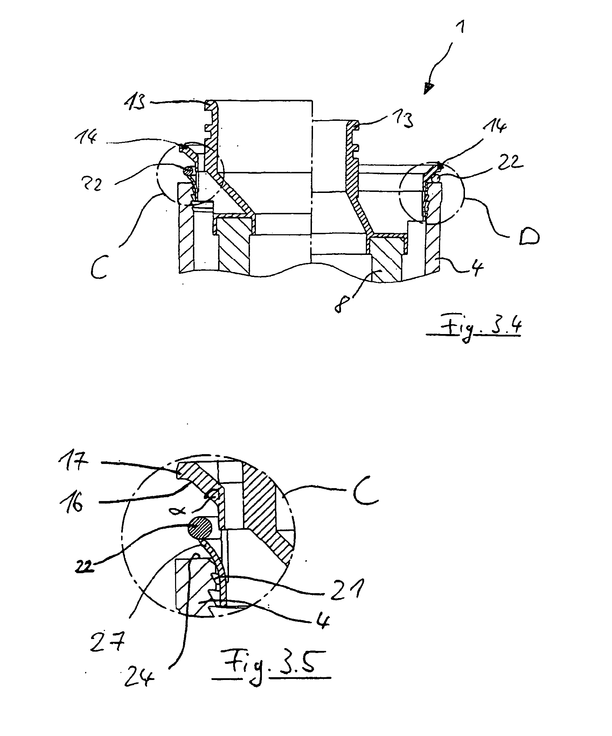

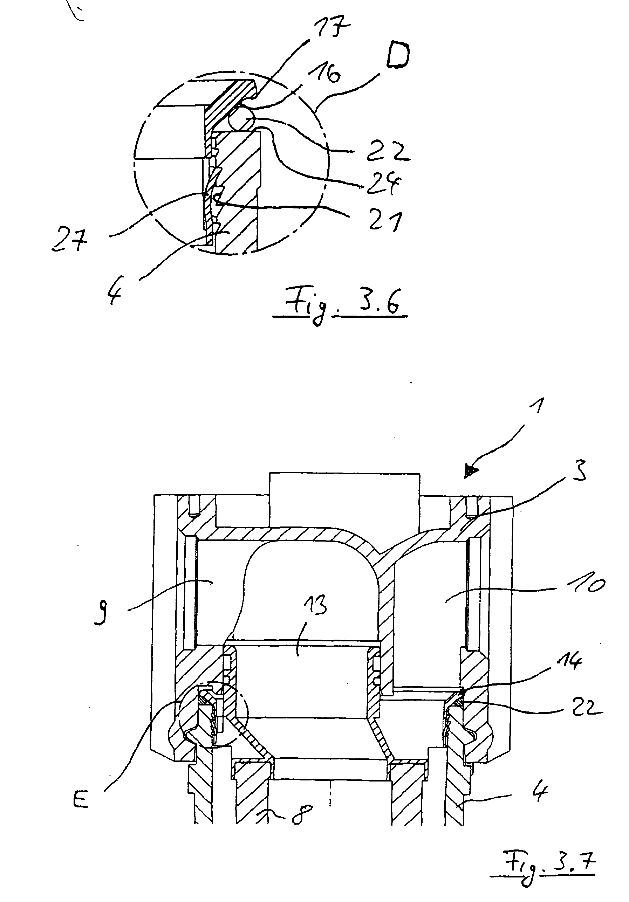

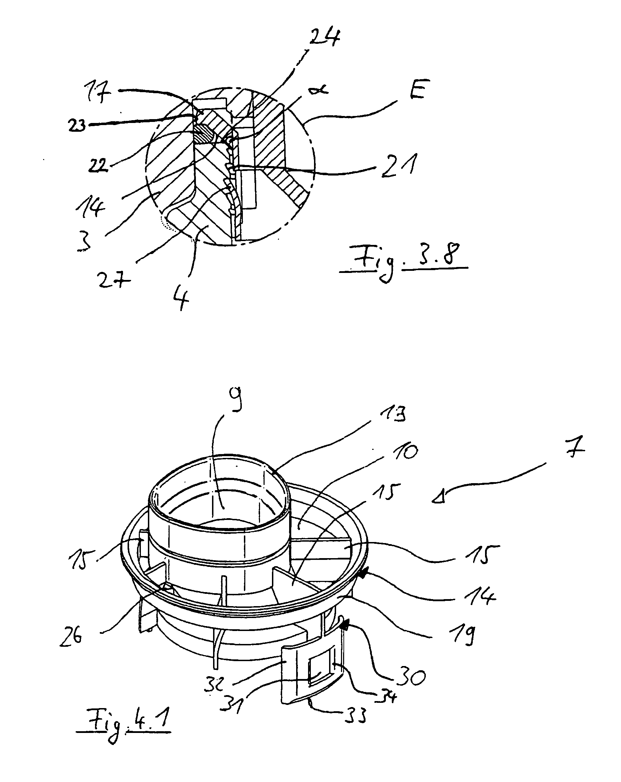

Im Folgenden wird unter Bezugnahme auf die Fig. 3.1 bis 3.8 ein Druckluftfilter 1 bzw. ein Filterelement 5 gemäß einem zweiten bevorzugten Ausführungsbeispiel der vorliegenden Erfindung näher erläutert. Das zweite Ausführungsbeispiel der vorliegenden Erfindung weist im Unterschied zu dem ersten Ausführungsbeispiel eine modifizierte Gewindeverbindung 11 zwischen dem Filterelement 5 und der Gehäuseglocke 4 auf, was im Folgenden ausführlicher evaluiert wird.

Gemäß dem zweiten bevorzugten Ausführungsbeispiel weist der zylindrische Führungsabschnitt 19 des Kragenabschnitts 14 kein Außengewinde, sondern mehrere elastisch verformbare Federzungen 27 auf. Die elastischen Federzungen 27 sind entlang der Umfangsfläche des Führungsabschnitts 19 vorzugsweise in regelmäßigem Abstand voneinander und, wie insbesondere in Fig. 3.2 ersichtlich, auf unterschiedlichem axialen Niveau derart angeordnet, dass ein vorbestimmter Gewindeeingriff mit einem zugeordneten Innengewinde 21 der Gehäuseglocke 4 gewährleistet wird.

Die Federzungen 27 sind beispielsweise als aus dem Führungsabschnitt 29 ausgestanzte Laschen ausgebildet, deren freies Ende axial in Richtung des Halsabschnitts 13 orientiert ist. Die Federzungen 27 erstrecken sich radial mit ihren freien Enden vor einem Einsetzen des Filterelements 5 in die Gehäuseglocke 4 vorzugsweise in etwa bis zum Mittelpunkt des Dichtschnurquerschnitts, wie in Fig. 3.5 dargestellt ist, und maximal bis in etwa zum Außendurchmesser des Dichtringes 22. Dadurch bilden die Federzungen 27 eine Lagereinrichtung zum Tragen des Dichtringes 22 vor einem Einsetzen des Filterelementes 5 in die Gehäuseglocke 4 in einer vorbestimmten Position. Allerdings ist es auch vorstellbar, dass die Federzungen 27 jeweils sich in in etwa radialer Richtung erstreckende Stege aufweisen, welche einer Abstützung des Dichtringes 22 dienen. In diesem Fall können sich die Federzungen 27 radial auch über die radiale Erstreckung des Dichtringes 22 hinaus erstrecken. Die Stege sind beispielsweise am freien Ende der Federzungen 27 angeformt und derart ausgestaltet, dass sie in die ausgestanzten Öffnungen verlagerbar sind, falls die Federzungen entsprechend verformt werden.

Die Federzungen 27 sind ferner jeweils zur Außenseite hin gerichtet vorgespannt und können aufgrund ihrer elastischen Eigenschaft in Richtung der Mittelachse 46 des Filterelementes 5 elastisch verstellt werden, wie in Fig. 3.6 illustriert ist.

Die Gehäuseglocke 4 besitzt als zu den Federzungen 27 korrespondierendes Innengewinde 21 an ihrer inneren Umfangsfläche vorzugsweise ein Gewinde mit einem sägezahnartigen Profil, wie in den Fig. 3.5 und 3.6 dargestellt ist. Die einzelnen Gewindeabschnitte des Innengewindes 21 können hierbei unterschiedliche Gewindetiefen aufweisen. Beispielsweise kann die Gewindetiefe axial in Richtung der zweiten Dichtfläche 24 der Gehäuseglocke 4 auslaufen. Dadurch wird bei vorbestimmter Wandstärke der Gehäuseglocke 4 eine möglichst breite zweite Dichtfläche 24 zur Verfügung gestellt, so dass eine optimierte Anlage an dem zugeordneten Dichtring 22 gewährleistet ist. Ferner wird durch ein entsprechendes Auslaufen der Gewindetiefe erreicht, dass das Filterelement 5 aus der Gehäuseglocke 4 mit möglichst wenigen Umdrehungen vorteilhaft ausgedreht werden kann.

Gemäß dem zweiten bevorzugten Ausführungsbeispiel kann das Filterelement 5 axial in die Gehäuseglocke 4 bei in vorbestimmter Halteposition gehaltenem Dichtring 22 auf den freien Enden der Federzungen 27 eingeschoben werden. Hierbei gelangen die Federzungen 27 ab einer vorbestimmten Einschubtiefe aufgrund ihrer elastischen Ausgestaltung in einen Einrasteingriff mit dem sägezahnartigen Innengewinde 21 der Gehäuseglocke 4. Für ein weiteres Einsetzen des Filterelementes 5 in die Gehäuseglocke 4 kann das Filterelement 4 weiter eingedreht werden, da die Federzungen 27 und das sägezahnartige Profil des Innengewindes 21 eine Art Gewindeeingriff darstellen und eine Gewindeverdrehung ermöglichen. Analog erfolgt eine Demontage des Filterelementes 5 durch Ausdrehen des Filterelementes 5 und somit der Federzungen 27 aus dem Innengewinde 21 der Gehäuseglocke 4 in Gegenrichtung.

Analog zum ersten bevorzugten Ausführungsbeispiel erzeugt ein Einschieben oder Eindrehen des Filterelementes 5 in die Gehäuseglocke 4 gemäß dem zweiten Ausführungsbeispiel ebenfalls ein weiteres Einziehen des Filterelementes 5 in die Gehäuseglocke 4 hinein derart, dass die zweite Dichtfläche 24 den Dichtring 22 entlang der Anlagefläche 16 radial aufweitet, wie in Fig. 3.6 dargestellt ist, und in dichtende Anlagen mit der nicht dargestellten, ersten Dichtfläche des Gehäusekopfes 3 drängt.

Hinsichtlich Merkmalen und Funktionsweisen der vorliegenden Erfindung, die im Zusammenhang mit der obigen Beschreibung des zweiten bevorzugten Ausführungsbeispiels nicht näher erläutert wurden, kann auf die zuvor getätigte Beschreibung des ersten Ausführungsbeispiels verwiesen werden, da diese Merkmalen und Funktionsweisen analog ausgebildet sind, so dass auf eine detaillierte Erläuterung davon zur Vermeidung von unnötigen Wiederholungen verzichtet werden kann.

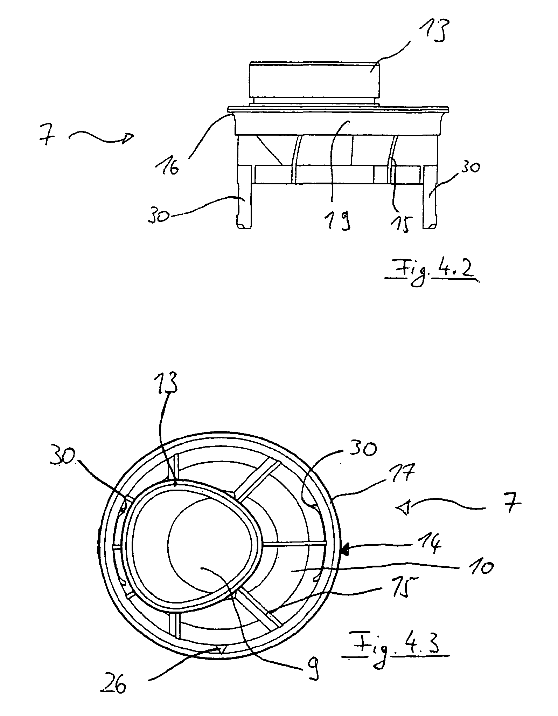

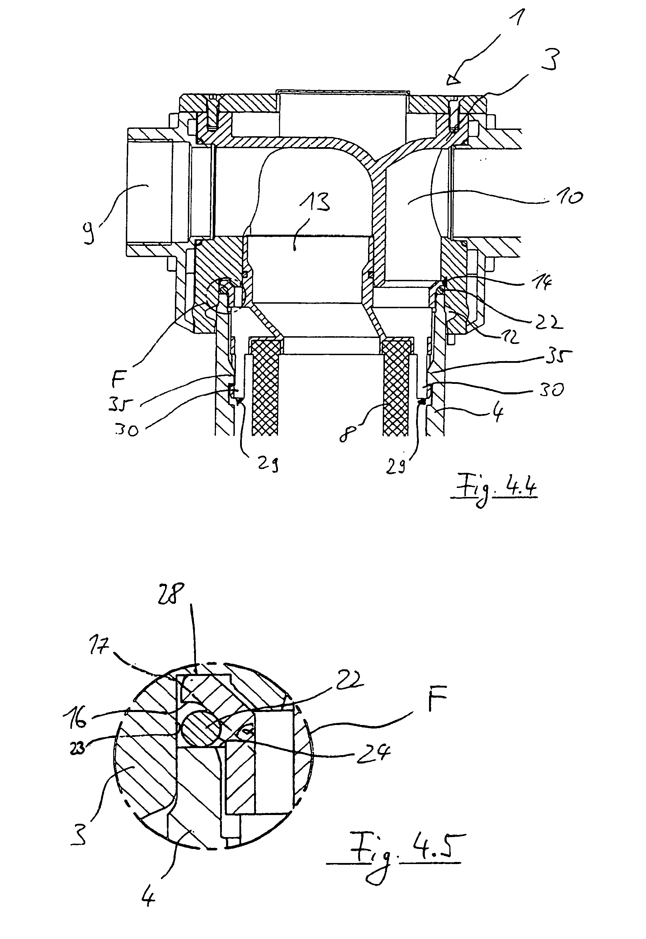

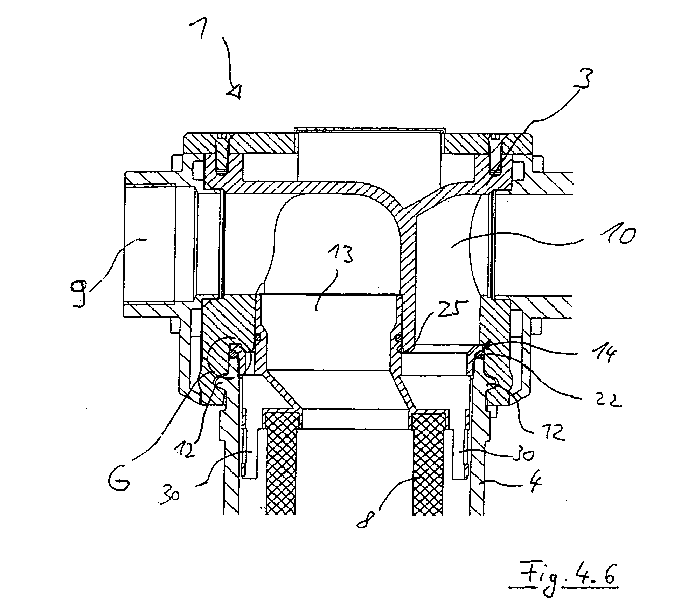

Im Folgenden wird unter Bezugnahme auf die Fig. 4.1 bis 4.7 ein Druckluftfilter 1 bzw. ein Filterelement 5 gemäß einem dritten bevorzugten Ausführungsbeispiel der vorliegenden Erfindung näher erläutert.

Gemäß dem dritten bevorzugten Ausführungsbeispiel wird im Vergleich zu den beiden oben genannten Ausführungsbeispielen eine Relativbewegung zwischen dem Kragenabschnitt 14 des Filterelementes 5 und der Gehäuseglocke 4 während der Schließbewegung des Filtergehäuses 2 auf unterschiedliche Art und Weise bewerkstelligt. Gemäß dem dritten Ausführungsbeispiel ist die Drehverbindung 12 zwischen dem Gehäusekopf 3 und der Gehäuseglocke 4 als Bajonettverbindung mit einer vorbestimmten Steigung ausgestaltet, so dass bei einer Schließbewegung des Filtergehäuses 2 der Gehäusekopf 3 und die Gehäuseglocke 4 eine aufeinander zu gerichtete, axiale Relativbewegung ausführen.

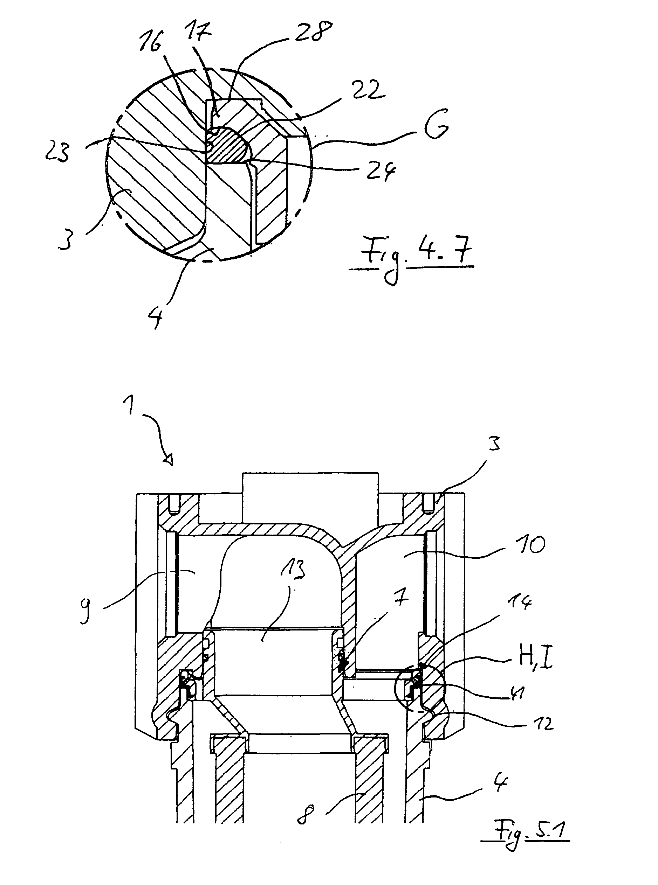

Es ist zudem eine Anschlageinrichtung 28 vorgesehen, welche einen axialen Anschlag zwischen dem Kragenabschnitt 14 des Elementkopfes 7 und dem Gehäusekopf 3 vorsieht, um den Elementkopf 7 und somit die Anlagefläche 16 des Kragenabschnitts 14 bei einer Schließbewegung des Filtergehäuses 2 relativ zu der Gehäuseglocke 4 axial zu verstellen. Vorzugsweise umfasst die Anschlageinrichtung 28 eine Anschlagfläche des dem Gehäusekopf 3 zugewandten, stirnseitigen Abschnitts des Kragenabschnitts 14 sowie einen entsprechend zugeordneten und dem Kragenabschnitt 14 zugewandten Anschlagabschnitt des Gehäusekopfes 3, wie in beispielsweise den Fig. 4.5 und 4.7 illustriert ist. Die Anschlageinrichtung 28 bewirkt demnach während der Schließbewegung des Filtergehäuses 2 und der damit einhergehenden axialen Relativbewegung zwischen dem Gehäusekopf 3 und der Gehäuseglocke 4 einen Anschlag zwischen der Anschlagfläche des Kragenabschnitts 14 des Filterelements 5 und dem entsprechend zugeordneten Anschlagabschnitt des Gehäusekopfes 3 derart, dass auch eine axiale aufeinander zu gerichtete Relativbewegung zwischen dem Filterelement 5 und der Gehäuseglocke 4 bewirkt wird. Diese Relativbewegung wiederum drängt den Dichtring 22 entlang der Anlagefläche 16 und weitet den Dichtring 22 entsprechend radial in dichtende Anlage mit der zugeordneten ersten Dichtfläche 23 in einen elastisch vorgespannten Zustand auf, analog zu den oben bereits erläuterten Ausführungsbeispielen.

Im Unterschied allerdings zu den beiden erstgenannten Ausführungsbeispielen erfolgt gemäß dem dritten bevorzugten Ausführungsbeispiel eine Verbindung zwischen dem Filterelement 5 und der Gehäuseglocke 4 nicht über eine entsprechende Gewindeverbindung, sondern mittels einer geeignet ausgebildeten Rastverbindung 29, welche im Folgenden detaillierter erläutert wird.

Wie insbesondere in den Fig. 4.1 und 4.2 ersichtlich ist, weist der Elementkopf 7 beispielsweise zwei Rasteinrichtungen in Form von Schnappern 30 auf, welche vorzugsweise als in radialer Richtung federnde Fortsätze des Kragenabschnitts 14 in Richtung des Elementbodens 6 und umfänglich um in etwa 180° versetzt ausgebildet sind. Die Schnapper 30 bilden beispielsweise jeweils einen Fortsatz in Richtung des Elementbodens 6 einer jeweils zugeordneten Rippe 15. Die Schnapper 30 weisen zudem vorzugsweise eine in etwa rechteckförmige Ausgestaltung mit abgerundeten Seitenrändern auf. Jeder Schnapper 30 besitzt zudem eine in etwa mittige Öffnung bzw. Aufnahmebereich 31 zur Aufnahme einer entsprechend zugeordneten Gegenrasteinrichtung 35. Des Weiteren umfasst jeder Schnapper 30 für einen erleichterten Einrastvorgang abgeschrägte äußere Seitenränder 32 und zumindest einen abgeschrägten äußeren unteren Rand 33. Zudem sind zumindest Abschrägungen an den seitlichen Rändern 34 der Öffnung 31 vorgesehen, welche einen seitlichen Ausrastvorgang der entsprechend zugeordneten Gegenrasteinrichtung 35 entsprechend unterstützen.

Als Gegenrasteinrichtung 35 weist die Gehäuseglocke 4 vorzugsweise entsprechend an der inneren Umfangsfläche angeordnete und korrespondierende Rastnasen 35 auf, welche bei entsprechenden Einrast- bzw. Ausrastbewegungen über die abgeschrägten Ränder der Schnapper 30 bzw. der Öffnung 31 der Schnapper 30 gleiten und somit in eine entsprechende Rastverbindung mit den Schnappern 30 einrastbar bzw. aus der Rastverbindung ausrastbar sind. Die Rastnasen 35 sind für eine lagestabile Einrastung mit den jeweils zugeordneten Öffnungen 31 der Schnapper 30 komplementär ausgebildet, so dass das Filterelement 5 im Einrastzustand lagestabil an der Gehäuseglocke 4 eingerastet ist.

Vorzugsweise weisen die äußeren Seitenränder 32 der Schnapper 30 relativ flache Abschrägung gegenüber relativ steilen Abschrägungen der seitlichen Ränder 34 der Öffnung 31 auf. Somit ist für den Benutzer der Kraftaufwand für einen Rasteingriff zwischen Schnapper 30 und zugeordneter Rastnase 35 geringer als der Kraftaufwand für den entsprechenden Ausrastvorgang. Hierdurch lässt sich vorteilhaft für den Benutzer eine haptische Vorzugswinkelstellung des Filterelemente 5 relativ zu der Gehäuseglocke 4 gewährleisten. Vorzugsweise ist diese Vorzugswinkelstellung derart gewählt, dass in dieser der Halsabschnitt 13 des Filterelements 5 mit der entsprechend zugeordneten Aufnahmekontur 25 im Gehäusekopf 3 drehgesichert einsetzbar und dass die Bajonettverbindung 12 zwischen der Gehäuseglocke 4 und dem Gehäusekopf 3 axial in Eingriff bringbar ist, d.h. die Positionierung der Schnapper 30 und der entsprechend zugeordneten Rastnasen 35 ist vorzugsweise derart gewählt, dass während eines Einrastzustandes sich die Bajonettverbindung zwischen der Gehäuseglocke 4 und dem Gehäusekopf 3 für eine Trennung dieser Bauteile voneinander in der Öffnungsstellung befindet. Das Filterelement 5 wird folglich bei der Trennung der Gehäuseglocke 4 von dem Gehäusekopf 3 durch die bewerkstelligte Rastverbindung zwischen Schnappern 30 und zugeordneten Rastnasen 35 vorteilhaft in der Gehäuseglocke 4 axial gehalten.

Für einen Einsetzvorgang eines neuen Filterelementes 5 wird dieses zunächst axial in die Gehäuseglocke 4 eingeführt, entweder bereits in der entsprechenden Einraststellung oder in einer Ausraststellung, wobei in diesem Fall durch anschließendes manuelles Drehen des Filterelementes 5 die Einraststellung herbeigeführt wird. Der Einrastvorgang kann dabei als haptische Anzeige einer Vorzugswinkelstellung für den Benutzer dienen. Allerdings sind geeignete, zusätzliche oder alternative Markierungen 26 zu diesem Zwecke ebenfalls vorstellbar.

Anschließend wird die Gehäuseglocke 4 mit eingerastetem Filterelement 5 in den Gehäusekopf 3 entsprechend eingesetzt und durch eine Schließbewegung mittels der Bajonettverbindung 12 in dichtender Weise damit fest verbunden. Für den Einsetzvorgang können wiederum vorbestimmte Markierungen vorgesehen sein, um dem Benutzer eine Vorzugswinkelstellung anzuzeigen. Hierdurch, wie oben bereits ausführlich erläutert, erfolgt durch die axiale Anschlageinrichtung 28 eine Relativbewegung zwischen dem Filterelement 5 und der Gehäuseglocke 4, wodurch der Dichtring 22 entlang der Anlagefläche 16 radial und in dichtende Anlage mit der ersten Dichtfläche 23 aufgeweitet wird.

Für eine Entnahme eines beispielsweise verschmutzten Filterelementes 5 wird in umgekehrter Reihenfolge vorgegangen, wobei nach Entnahme der Gehäuseglocke 4 aus dem Gehäusekopf 3 durch Lösen der Bajonettverbindung 12 das Filterelement 5 sich nach wie vor in Rastverbindung mit der Gehäuseglocke 4 befindet. Durch manuelles Drehen des Filterelementes 5 in der Gehäuseglocke 4 kann die Rastverbindung außer Eingriff gebracht und das Filterelement 5 auf einfache Weise aus der Gehäuseglocke 4 entnommen werden.

Die Schnapper 30 sind weiterhin vorzugsweise derart ausgestaltet, dass sie sowohl in der Einraststellung auf den entsprechend zugeordneten Rastnasen 35 als auch in der Ausraststellung abseits der Rastnasen 35 einen radial undeformierten Zustand einnehmen. Da die Elementköpfe 7 in der Regel als Spritzgussteile aus einem geeigneten Kunststoff hergestellt sind, welcher unter Umständen unter dauerhaft aufgeprägten Deformationen bzw. Vorspannungen Kriecherscheinungen zeigt, gewährleistet dieser radial undeformierte Zustand der Schnapper 30 eine verlängerte Lebensdauer derselben und somit der Rastverbindung zwischen dem Filterelement 5 und der Gehäuseglocke 4. Allerdings ist für einen Fachmann offensichtlich, dass mit entsprechend durchgeführten Modifikationen auch eine kinematische Umkehr der oben erläuterten Rastverbindung denkbar ist, wonach die Rastnasen oder ähnliche Gegenrasteinrichtungen beispielsweise an dem Filterelement 5 und die zugeordneten Schnapper 30 oder entsprechend anders ausgestaltete, komplementäre Rasteinrichtungen an der inneren Umfangsfläche der Gehäuseglocke 4 entsprechend vorgesehen sind.

Es sei an dieser Stelle angemerkt, dass die Schnapper auch jeweils mehrere Öffnungen mit jeweils entsprechend abgeschrägten Kanten aufweisen können, beispielsweise zwei identische, nebeneinander angeordnete Öffnungen je Schnapper. Des Weiteren können die Schnapper jeweils einen offen Seitenbereich derart aufweisen, dass eine Gleitrampe lediglich an einer vorbestimmten Seite vorgesehen ist und an der gegenüberliegenden Seite ein Eintritt bzw. Austritt der zugeordneten Gegenrasteinrichtung ohne Gleitrampe in den Aufnahmebereich des jeweiligen Schnappers erfolgt. Dies ist an die Ausgestaltung der anderen Bauteile und an den Drehsinn bei der Schließbewegung entsprechend anzupassen und vorzusehen. Ferner können bei Vorhandensein der Schnapper oder einer entsprechenden Rast- oder Gegenrasteinrichtung auf zusätzliche Einrichtungen zur Winkelstellungsanzeige verzichtet werden, da die oben beschriebene Rastverbindung diese Funktion mit übernehmen kann.

Hinsichtlich Merkmalen und Funktionsweisen der vorliegenden Erfindung, die im Zusammenhang mit der obigen Beschreibung des dritten bevorzugten Ausführungsbeispiels nicht näher erläutert wurden, kann auf die zuvor getätigten Beschreibungen des ersten bzw. zweiten Ausführungsbeispiels verwiesen werden, da diese Merkmalen und Funktionsweisen analog ausgebildet sind, so dass auf eine detaillierte Erläuterung davon zur Vermeidung von unnötigen Wiederholungen verzichtet werden kann. Des Weiteren sei an dieser Stelle angemerkt, dass die einzelnen speziellen Lösungen der ersten drei genannten Ausführungsbeispiele im Rahmen der allgemeinen Erfindungsidee der vorliegenden Erfindung beliebig miteinander kombiniert werden können, solange dies für einen Fachmann technisch sinnvoll erscheint.

Im Folgenden wird unter Bezugnahme auf die Fig. 5.1 bis 5.3 ein Druckluftfilter 1 bzw. ein Filterelement 5 gemäß einem vierten bevorzugten Ausführungsbeispiel der vorliegenden Erfindung näher erläutert. Hinsichtlich allgemeiner Ausführungen kann zur Vermeidung von Wiederholungen auf die vorstehend beschriebenen Ausführungsbeispiele verwiesen werden.

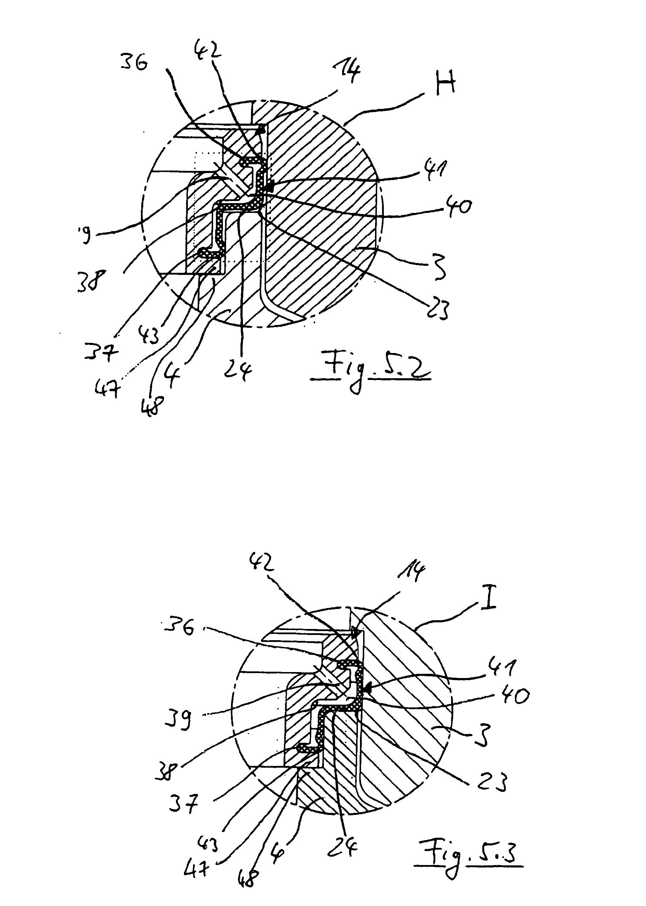

Gemäß dem vierten bevorzugten Ausführungsbeispiel weist der Kragenabschnitt 14 des Elementkopfes 7 eine beispielsweise umlaufende und relativ zu der Mittelachse 46 des Filterelementes 5 rotationssymmetrische Ausgestaltung mit einer doppelt abgewinkelten, S-formähnlichen Geometrie auf, wie insbesondere in Fig. 5.2 und 5.3 ersichtlich ist.

Der Kragenabschnitt 14 umfasst einen dem Halsabschnitt 13 zugewandten ersten Befestigungsabschnitt in Form einer Aufnahmerille 36 sowie einen dem Elementboden 6 zugewandten zweiten Befestigungsabschnitt ebenfalls in Form einer Aufnahmerille 37. Zwischen der ersten Aufnahmerille 36 und der zweiten Aufnahmerille 37 besitzt der Kragenabschnitt 14 einen Dichtring-Aufnahmeabschnitt 38, welcher in seiner Kontur an die geometrischen Abmessungen der zugeordneten Dichtflächen der Gehäuseglocke 4 und des Gehäusekopfes 3 in der Schließstellung des Filtergehäuses angepasst ist.

Des Weiteren weist der Kragenabschnitt 14 mehrere Bohrungen 39 auf, welche aus dem Dichtring-Aufnahmeabschnitt 38 ausmünden und einen vor dem Dichtring-Aufnahmeabschnitt 38 positionierten Freiraum 40 mit dem Innendruck des Filtergehäuses 2, insbesondere mit dem Strömungsbereich zwischen der Außenwandung des Filtermediums 8 des Filterelementes 5 und der Innenwandung der Gehäuseglocke 4, verbinden. Der Freiraum 40 kann entweder als umlaufender oder in mehrere Abschnitte unterteilter Freiraum ausgebildet sein.

Zudem umfasst der Kragenabschnitt 14 einen Anschlagabschnitt 47, welcher beispielsweise unterhalb der zweiten Aufnahmerille 37 als umlaufender, zur Außenseite hin gerichteter Vorsprung vorgesehen ist. Der Anschlagabschnitt 47 korrespondiert mit einer zugeordneten Anlagefläche 48 im Inneren der Gehäuseglocke 4, beispielsweise in Form einer umlaufenden Stufe, derart, dass ein axialer Anschlag in einer vorbestimmten axialen Schließstellung beim Einsetzen des Filterelementes 5 in die Gehäuseglocke 4 gewährleistet wird, wie in den Figuren 5.2 und 5.3 ersichtlich ist.

Des weiteren umfasst der Kragenabschnitt 14 eine Sonderformdichtung 41, welche in ihrer geometrischen Abmessung an die Ausgestaltung der Anlagefläche 16 des Kragenabschnitts 14 angepasst und mit ihren axialen Seitenrändern in den Befestigungsabschnitte 36, 37 fest einsetzbar ist. Die Sonderformdichtung 41 begrenzt im eingesetzten Zustand den Freiraum 40 zwischen dem Dichtring-Aufnahmeabschnitt 38 der Anlagenfläche 16 und der Innenfläche der Sonderformdichtung 41, wie in den Fig. 5.2 und 5.3 illustriert ist. Der Freiraum 40 ist vorzugsweise in der Schließstellung des Filtergehäuses 2 dem abzudichtenden Raum zwischen der ersten Dichtfläche 23 des Gehäusekopfes 3 und der zweiten Dichtfläche 24 der Gehäuseglocke 4 auf der diametral gegenüberliegenden Seite der Sonderformdichtung 41 positioniert.

Ferner weist die Sonderformdichtung 41 kleine und leicht deformierbare Dichtlippen 42, 43, vorzugsweise jeweils eine in einem Randbereich, auf, welche nach einer Montage des Filterelementes 5 in dem Filtergehäuse 2 mit der ersten Dichtfläche 23 bzw. der zugeordneten inneren Umfangsfläche des Gehäusekopfes 3 sowie einer zugeordneten inneren Umfangsfläche der Gehäuseglocke 4 in dichtenden Kontakt stehen. Die Dichtlippen 42, 43 können derart ausgebildet sein, dass sie keine vollständige Abdichtung an den jeweils zugeordneten Flächen erzielen, sondern lediglich bewirken, dass die Querschnitte der von dem Gehäuseinneren nach außen führenden Leckagepfade zwischen dem Gehäusekopf 3 und der Gehäuseglocke 4 groß im Verhältnis zu den verbleibenden Leckagepfaden zwischen den Dichtlippen 42, 43 und den jeweils zugeordneten Anlageflächen sind. Durch diese Maßnahme wird bewirkt, dass sich auf der dem Kragenabschnitt 14 zugewandten Seite der Sonderformdichtung 41 in dem Freiraum 40 bei Druckbeaufschlagung des Druckluftfilters 1 im Wesentlichen der Gehäusedruck einstellt, während sich in dem durch die Dichtlippen 42, 43 zwischen der Sonderformdichtung 41, dem Gehäusekopf 3 und der Gehäuseglocke 4 gebildeten Raum infolge der Leckagepfade nach außen ein Druck einstellt, der zwischen dem Gehäuseinnendruck und dem Umgebungsdruck liegt und wesentlich niedriger ist, als der Innendruck im Filtergehäuse 2. Durch diese Druckdifferenz wird der zwischen den Dichtlippen 42, 43 liegende Abschnitt der Sonderformdichtung 41 in dichtende Anlage an den ersten und zweiten Dichtflächen 23, 24 des Gehäusekopfes 3 bzw. der Gehäuseglocke 4 gebracht, wodurch das Gehäuseinnere gegenüber der Umgebung wunschgemäß abgedichtet wird.

Es ist für einen Fachmann offensichtlich, dass das Querschnittsprofil der Sonderformdichtung 41 in weiten Bereichen frei auswählbar ist. Es ist jedoch zumindest ein Abschnitt der Sonderformdichtung 41 erforderlich, welcher in den Freiraum 40 zwischen der stirnseitigen Dichtfläche der Gehäuseglocke 4 bzw. der zweiten Dichtfläche 24 und der inneren Umfangsfläche des Gehäusekopfes 3 bzw. der ersten Dichtfläche 23 einpassbar ist. Ferner können die vorgesehenen Bohrungen 39 auch eine Verbindung des Freiraumes 40 mit dem Innenbereich des Filtermediums 8 zum Liefern der gewünschten Druckdifferenz gewährleisten.

Obwohl die vorliegende Erfindung anhand bevorzugter Ausführungsbeispiele vorstehend beschrieben wurde, ist sie darauf nicht beschränkt, sondern auf vielfältige Weise modifizierbar. Insbesondere sind die oben beschriebenen Ausführungsbeispiele zumindest teilweise miteinander kombinierbar.

### Bezugszeichenliste

- 1: Druckluftfilter
- 2: Filtergehäuse
- 3: Gehäusekopf
- 4: Gehäuseglocke
- 5: Filterelement
- 6: Elementboden
- 7: Elementkopf
- 8: Filtermedium
- 9: Zuströmkanal
- 10: Abströmkanal
- 11: Gewindeverbindung
- 12: Drehverbindung
- 13: Halsabschnitt
- 14: Kragenabschnitt
- 15: Rippen
- 16: Anlagefläche
- 17: Begrenzungsrippe
- 18: Rille
- 19: Führungsabschnitt
- 20: Außengewinde
- 21: Innengewinde
- 22: Dichtring
- 23: erste Dichtfläche
- 24: zweite Dichtfläche
- 25: Aufnahmekontur
- 26: Markierungen
- 27: Federzungen
- 28: Anschlageinrichtung
- 29: Rastverbindung
- 30: Schnapper
- 31: Öffnung/Aufnahmebereich
- 32: Seitenränder eines Schnappers
- 33: unterer Rand eines Schnappers
- 34: seitliche Ränder einer Schnapperöffnung
- 35: Rastnasen
- 36: erster Befestigungsabschnitt
- 37: zweiter Befestigungsabschnitt
- 38: Dichtring-Aufnahmeabschnitt
- 39: Bohrungen
- 40: Freiraum
- 41: Sonderformdichtung
- 42: Dichtlippe
- 43: Dichtlippe
- 44: Dichtung
- 45: Nut
- 46: Mittelachse des Filterelementes
- 47: Anschlagabschnitt
- 48: Anlagefläche
- α: Steigungswinkel

## Patentansprüche

1. Filterelement (5) zum Abscheiden von Fremdstoffen aus einem Druckluftstrom, mit:
einem Elementboden (6);
einem Elementkopf (7), welcher einen einen ersten Strömungskanal (9) bildenden Halsabschnitt (13) und einen Kragenabschnitt (14) aufweist, der den Halsabschnitt (13) zumindest abschnittsweise umlaufend ausgebildet und unter Bildung eines zweiten Strömungskanals (10) mit dem Halsabschnitt (13) verbunden ist; und
einem Filtermedium (8), welches mit dem Elementboden (6) und dem Elementkopf (7) zum Bilden eines Gasströmungspfades zwischen dem ersten Strömungskanal (9) und dem zweiten Strömungskanal (10) durch das Filtermedium (8) hindurch dichtend verbunden ist;
wobei der Kragenabschnitt (14) eine zumindest abschnittsweise außenumfänglich vorgesehene und sich in Richtung des Elementbodens (6) verjüngende Anlagefläche (16) zur Aufnahme eines zugeordneten Dichtelementes (22) derart aufweist, dass eine in etwa axial aus Richtung des Elementbodens (6) auf das Dichtelement (22) wirkende Kraft eine radiale Aufweitung des Dichtelementes (22) entlang der Anlagefläche (16) bewirkt.

2. Filterelement nach Anspruch 1,
**dadurch gekennzeichnet,**
**dass** der Kragenabschnitt (14) den Halsabschnitt (13) vollumfänglich umlaufend und im Wesentlichen zur Mittelachse (46) des Filterelementes (5) rotationssymmetrisch ausgebildet ist.

3. Filterelement nach Anspruch 1 oder 2,
**dadurch gekennzeichnet,**
**dass** die Anlagefläche (16) des Kragenabschnitts (14) vollumfänglich und im Wesentlichen zur Mittelachse (46) des Filterelements (5) rotationssymmetrisch ausgestaltet ist.

4. Filterelement nach wenigstens einem der vorhergehenden Ansprüche,
**dadurch gekennzeichnet,**
**dass** die Anlagefläche (16) des Kragenabschnitts (14) als Konusfläche ausgebildet ist, deren Steigungswinkel (α) zwischen der Anlagefläche (16) und der Mittelachse (46) des Filterelements (5) vorzugsweise zwischen 25° und 65° beträgt.

5. Filterelement nach wenigstens einem der vorhergehenden Ansprüche,
**dadurch gekennzeichnet,**
**dass** der Kragenabschnitt (14) eine die Anlagefläche (16) in Richtung des Elementkopfes (7) begrenzende Begrenzungsrippe (17) aufweist, welche vorzugsweise umlaufend und im Wesentlichen zur Mittelachse (46) des Filterelementes (5) rotationssymmetrisch ausgebildet ist.

6. Filterelement nach wenigstens einem der vorhergehenden Ansprüche,
**dadurch gekennzeichnet,**
**dass** das Dichtelement als Dichtring (22) ausgebildet und mit einer geringen radialen Vorspannung auf dem Kragenabschnitt (14) in einer vorbestimmten Halteposition aufziehbar ist wobei der Dichtring (22) in der vorbestimmten Halteposition einen Außendurchmesser aufweist, welcher maximal etwas größer ist als der Außendurchmesser der die Anlagefläche (16) begrenzenden Begrenzungsrippe (17) des Kragenabschnitts (14).

7. Filterelement nach wenigstens einem der vorhergehenden Ansprüche,
**dadurch gekennzeichnet,**
**dass** das Dichtelement (22) als O-Ring-Dichtung mit einem im Wesentlichen kreisförmigen Querschnitt ausgebildet ist.

8. Filterelement nach wenigstens einem der vorhergehenden Ansprüche,
**dadurch gekennzeichnet,**
**dass** die Anlagefläche (16) des Kragenabschnitte (14) zur Aufrechterhaltung einer dauerhaften elastischen Vorspannung des Dichtelementes (22) elastisch verformbar ausgebildet ist wobeidie Anlagefläche (16) des Kragenabschnitts (14) mehrere radial angeordnete und elastisch verformbare Segmente aufweist.

9. Filterelement nach wenigstens einem der vorhergehenden Ansprüche,
**dadurch gekennzeichnet,**
**dass** der Kragenabschnitt (14) mittels mehrerer Rippen (15) mit dem Halsabschnitt (13) fest verbunden ist, wobei die mehreren Rippen (15) vorzugsweise jeweils strömungstechnisch optimiert ausgestaltet sind.

10. Filterelement nach wenigstens einem der vorhergehenden Ansprüche,
**dadurch gekennzeichnet,**
**dass** der Halsabschnitt (13) mit einem von der Kreisform abweichenden Querschnitt ausgestaltet ist und/oder eine exzentrische Position relativ zu der Mittelachse (46) des Filterelementes (5) aufweist.

11. Filterelement nach wenigstens einem der vorhergehenden Ansprüche,
**dadurch gekennzeichnet,**
**dass** der Elementkopf (7) mindestens eine optische, akustische und/oder haptische Winkelstellungsanzeigeeinrichtung aufweist.

12. Filterelement nach wenigstens einem der vorhergehenden Ansprüche,
**dadurch gekennzeichnet,**
**dass** der Kragenabschnitt (14) mindestens eine Rasteinrichtung als haptische Winkelstellungsanzeigeeinrichtung aufweist.

13. Filterelement nach wenigstens einem der vorhergehenden Ansprüche,
**dadurch gekennzeichnet,**
**dass** der Elementkopf (7) einen dem Elementboden (6) zugewandten, zylindrischen Führungsabschnitt (19) mit mehreren elastisch verformbaren Federzungen (27) aufweist, deren freien Enden in axialer Richtung dem Halsabschnitt (13) zugewandt und auf unterschiedlichem axialen Niveau angeordnet sind, und deren radiale Erstreckung in etwa der radialen Erstreckung des Dichtrings (22) in der Halteposition zur Abstützung desselben entspricht.

14. Filterelement nach wenigstens einem der vorhergehenden Ansprüche,
**dadurch gekennzeichnet,**
**dass** der Kragenabschnitt (14) einen axialen Anschlagabschnitt (28) aufweist.

15. Filterelement nach wenigstens einem der Ansprüche 1 bis 12 oder 14,
**dadurch gekennzeichnet,**
**dass** der Kragenabschnitt (14) mindestens eine Rasteinrichtung (30) für eine Rastverbindung (29) mit einer zugeordneten Gegenrasteinrichtung eines Filtergehäuses aufweist, wobei die mindestens eine Rasteinrichtung (30) mehrere Schnapper (30) aufweist, welche als in radialer Richtung federnde Fortsätze des Kragenabschnitts (14) in Richtung des Elementbodens (6) ausgebildet sind und jeweils mindestens einen Aufnahmebereich (31) für eine Rastaufnahme der jeweils zugeordneten Gegenrasteinrichtung aufweisen, wobei zumindest etwaige seitliche und dem Elementboden (6) zugewandte Außenränder (32, 33) jedes Schnappers (30) zum Liefern einer relativ flachen Gleitrampe jeweils entsprechend abgeschrägt ausgebildet sind.

16. Filterelement nach Anspruch 15,
**dadurch gekennzeichnet,**
**dass** zumindest etwaige seitliche Ränder (34) des mindestens einen Aufnahmebereiches (31) eines jeweiligen Schnappers (30) zum Liefern einer relativ steilen Gleitrampe jeweils entsprechend abgeschrägt ausgebildet sind.

17. Filterelement nach einem der Ansprüche 15 oder 16,
**dadurch gekennzeichnet,**
**dass** die Schnapper (30) jeweils derart ausgebildet sind, dass sie während der Rastverbindung (29) mit der zugeordneten Gegenrasteinrichtung als auch während der Ruheposition, in welcher sich die Schnapper (30) jeweils außer Eingriff mit der zugeordneten Gegenrasteinrichtung befinden, einen radial undeformierten Zustand einnehmen.

18. Druckluftfilter (1) zum Abscheiden von Fremdstoffen aus einem Druckluftstrom, mit:
einem Filterelement (5), welches nach wenigstens einem der vorhergehenden Ansprüche ausgebildet ist; und
einem das Filterelement (5) dichtend aufnehmenden Filtergehäuse (2), welches einen Gehäusekopf (3) mit einer dem Dichtelement (22) des Filterelementes (5) zugeordneten, zumindest abschnittsweise innenumfänglich vorgesehenen ersten Dichtfläche (23) und eine Gehäuseglocke (4) mit einer dem Dichtelement (22) des Filterelementes (5) zugeordneten, zumindest abschnittsweise stirnseitig vorgesehenen zweiten Dichtfläche (24) aufweist;
wobei die Gehäuseglocke (4) mittels einer Schließbewegung des Filtergehäuses (2) mit dem Gehäusekopf (3) zum Bilden einer dichtenden Schließstellung verbindbar ist; und
wobei das Filterelement (5) derart mit dem Gehäusekopf (3) und der Gehäuseglocke (4) koppelbar ist, dass die Schließbewegung des Filtergehäuses (2) eine in etwa axial aufeinander zu gerichtete Relativbewegung zwischen dem Kragenabschnitt (14) des Filterelementes (5) und der Gehäuseglocke (4) bewirkt, wodurch die zweite Dichtfläche (24) der Gehäuseglocke (4) das Dichtelement (22) durch eine dichtende Vorschubbewegung entlang der Anlagefläche (16) des Kragenabschnitts (14) des Filterelements (5) in dichtende Anlage mit der ersten Dichtfläche (23) des Gehäusekopfes (3) radial aufweitet.

19. Druckluftfilter nach Anspruch 18,
**dadurch gekennzeichnet,**
**dass** der Gehäusekopf (3) eine an die Form des Halsabschnitts (13) des Filterelementes (5) angepasste Aufnahmekontur (25) zum Bilden einer Verdrehsicherung des Filterelementes (5) relativ zu dem Gehäusekopf (3) des Filtergehäuses (2) aufweist.

20. Druckluftfilter nach Anspruch 18 oder 19,
**dadurch gekennzeichnet,**
**dass** das Dichtelement (22) als Dichtring (22) ausgebildet ist und in seiner Halteposition einen Außendurchmesser aufweist, welcher kleiner oder gleich dem Durchmesser der ersten Dichtfläche (23) des Gehäusekopfes (3) ist.

21. Druckluftfilter nach wenigstens einem der Ansprüche 18 bis 20,
**dadurch gekennzeichnet,**
**dass** die Gehäuseglocke (4), der Gehäusekopf (3) und/oder der Elementkopf (7) des Filterelementes (5) mindestens eine optische, akustische und/oder haptische Winkelstellungsanzeigeeinrichtung (26; 30, 31, 35) zum Anzeigen von jeweils relativen Positionen zueinander aufweisen.

22. Druckluftfilter nach wenigstens einem der Ansprüche 18 bis 21,
**dadurch gekennzeichnet,**
**dass** die Gehäuseglocke (4) mit dem Gehäusekopf (3) mittels einer Gewinde- und/oder Bajonettverbindung (12), vorzugsweise mittels einer Bajonettverbindung (12) ohne Steigung, oder einer ähnlichen Drehverbindung verbindbar ist.

23. Druckluftfilter nach wenigstens einem der Ansprüche 18 bis 22,
**dadurch gekennzeichnet,**
**dass** der Elementkopf (7) einen dem Elementboden (6) zugewandten, zylindrischen Führungsabschnitt (19) mit einem Außengewinde (20) umfasst.

24. Druckluftfilter nach Anspruch 23,
**dadurch gekennzeichnet,**
**dass** die Gehäuseglocke (4) ein mit dem Außengewinde (20) des Elementkopfes (7) korrespondierendes Innengewinde (21) für einen Gewindeeingriff (11) aufweist.

25. Druckluftfilter nach wenigstens einem der Ansprüche 18 bis 22,
**dadurch gekennzeichnet,**
**dass** der Elementkopf (7) einen dem Elementboden (6) zugewandten, zylindrischen Führungsabschnitt (19) mit mehreren elastisch verformbaren Federzungen (27) aufweist, deren freien Enden in axialer Richtung dem Halsabschnitt (13) zugewandt und auf unterschiedlichem axialen Niveau angeordnet sind, und deren radiale Erstreckungen und Ausgestaltungen eine Abstützung des Dichtelementes (22) in einer vorbestimmten Halteposition ermöglichen, wobei die Gehäuseglocke (4) ein mit den elastisch verformbaren Federzungen (27) des Elementkopfes (7) korrespondierendes Innengewinde (21) aufweist, wobei das Innengewinde (21) der Gehäuseglocke (4) ein sägezahnartiges Profil aufweist.

26. Druckluftfilter nach Anspruch 25,
**dadurch gekennzeichnet,**
**dass** das Innengewinde (21) der Gehäuseglocke (4) axial in Richtung der zweiten Dichtfläche (24) der Gehäuseglocke (4) ausläuft.

27. Druckluftfilter nach wenigstens einem der Ansprüche 18 bis 21,
**dadurch gekennzeichnet,**
**dass** die Gehäuseglocke (4) mit dem Gehäusekopf (3) mittels einer Bajonettverbindung (12) mit vorbestimmter Steigung verbindbar ist.

28. Druckluftfilter nach wenigstens einem der Ansprüche 18 bis 22 oder 25 bis 27,
**dadurch gekennzeichnet,**
**dass** der Kragenabschnitt (14) eine axiale Anschlageinrichtung (28) für einen axialen Anschlag an einer zugeordneten Anschlagfläche des Gehäusekopfes (3), vorzugsweise an der dem Gehäusekopf (3) zugewandten Stirnseite des Kragenabschnitts (14), aufweist.

29. Druckluftfilter nach wenigstens einem der Ansprüche 18 bis 21, 27 oder 28,
**dadurch gekennzeichnet,**
**dass** der Kragenabschnitt (14) mindestens eine Rasteinrichtung (30) für eine Rastverbindung (29) mit einer zugeordneten Gegenrasteinrichtung (35) der Gehäuseglocke (4) aufweist, wobei die mindestens eine Rasteinrichtung (30) mehrere Schnapper (30) aufweist, welche als in radialer Richtung federnde Fortsätze des Kragenabschnitts (14) in Richtung des Elementbodens (6) ausgebildet sind und jeweils mindestens einen Aufnahmebereich (31) für eine Rastaufnahme der jeweils zugeordneten Gegenrasteinrichtung (35) der Gehäuseglocke (4) aufweist, wobei zumindest etwaige seitliche und dem Elementboden (6) zugewandten Außenränder (32, 33) jedes Schnappers (30) zum Liefern einer relativ flachen Gleitrampe jeweils entsprechend abgeschrägt ausgebildet sind, wobei zumindest etwaige seitliche Ränder (34) des mindestens einen Aufnahmebereiches (31) eines Schnappers (30) zum Liefern einer relativ steilen Gleitrampe jeweils entsprechend abgeschrägt ausgebildet sind, wobei die Schnapper (30) jeweils derart ausgebildet sind, dass sie während der Rastverbindung (29) mit der zugeordneten Gegenrasteinrichtung (35) als auch während der Ruheposition, in welcher sich die Schnapper (30) jeweils außer Eingriff mit der zugeordneten Gegenrasteinrichtung (35) befinden, jeweils einen radial undeformierten Zustand einnehmen.

30. Druckluftfilter nach wenigstens einem der Ansprüche 28 oder 29,
**dadurch gekennzeichnet,**
**dass** das Filterelement (5) derart mit dem Gehäusekopf (3) und der Gehäuseglocke (4) koppelbar ist, dass die Schließbewegung des Filtergehäuses (2) die axiale Anschlageinrichtung (28) des Kragenabschnitts (14) des Filterelementes (5) in axiale Anlage mit der zugeordneten Anschlagfläche des Gehäusekopfes (3) für eine in etwa axial aufeinander zu gerichtete Relativbewegung zwischen dem Filterelement (5) und der Gehäuseglocke (4) bringt.

31. Druckluftfilter nach wenigstens einem der Ansprüche 18 bis 21 oder 27 bis 30,
**dadurch gekennzeichnet,**
**dass** zwischen dem Kragenabschnitt (14) des Filterelementes (5) und der Gehäuseglocke (4) ein entsprechender Anschlag für eine axiale Abstützung des Filterelementes (5) gegen eine Bewegung in Richtung der Gehäuseglocke (4) vorgesehen ist, vorzugsweise in Form eines entsprechenden Absatzes an dem Filterelement (5) und/oder der Gehäuseglocke (4).

32. Druckluftfilter nach wenigstens einem der Ansprüche 29 bis 31,
**dadurch gekennzeichnet,**
**dass** die Innenwandung der Gehäuseglocke (4) die mindestens eine Gegenrasteinrichtung (35) für eine Rastverbindung (29) mit der mindestens einen Rasteinrichtung (30) des Kragenabschnitts (14) des Filterelementes (5) aufweist, wobei die mindestens eine Gegenrasteinrichtung (35) mehrere Rastnasen (35) umfasst, welche an der Innenwandung der Gehäuseglocke (4) derart vorgesehen sind, dass sie mit den jeweils zugeordneten Schnappern (30) bei der Offenstellung der Bajonettverbindung (12) rastend in Eingriff bringbar sind.

33. Druckluftfilter nach wenigstens einem der Ansprüche 29 bis 32,
**dadurch gekennzeichnet,**
**dass** die Schnapper (30) des Filterelementes (5) jeweils relativ flach abgeschrägte seitliche Außenränder (32) und relativ hierzu steil abgeschrägte seitliche Ränder (34) der Öffnung (31) zum Bilden einer haptischen Vorzugswinkelstellung aufweisen, in welcher sich die Gegenrasteinrichtung (35) in Eingriff mit den jeweils zugeordneten Schnappern (30) befinden, wobei in der Vorzugswinkelstellung der Halsabschnitt (13) des Filterelementes (5) mit der Aufnahmekontur (25) im Gehäusekopf (3) als auch die Bajonettverbindung (12) zwischen der Gehäuseglocke (4) und dem Gehäusekopf (3) axial in Eingriff bringbar sind.

34. Filterelement (5) zum Abscheiden von Fremdstoffen aus einem Druckluftstrom, mit:
einem Elementboden (6);
einem Elementkopf (7), welcher einen einen ersten Strömungskanal (9) bildenden Halsabschnitt (13) und einen Kragenabschnitt (14) aufweist, der den Halsabschnitt (13) zumindest abschnittsweise umlaufend ausgebildet und unter Bildung eines zweiten Strömungskanals (10) mit dem Halsabschnitt (13) verbunden ist; und
einem Filtermedium (8), welches mit dem Elementboden (6) und dem Elementkopf (7) zum Bilden eines Gasströmungspfades zwischen dem ersten Strömungskanal (9) und dem zweiten Strömungskanal (10) durch das Filtermedium (8) hindurch dichtend verbunden ist;
wobei der Kragenabschnitt (14) einen zumindest abschnittsweise außenumfänglich vorgesehenen Dichtelement-Aufnahmeabschnitt (38), mindestens einen Verbindungskanal (39) zwischen einem der beiden Strömungskanäle (9, 10) und dem Dichtelement-Aufnahmeabschnitt (38) sowie den Dichtelement-Aufnahmeabschnitt (38) axial begrenzende Dichtelement-Befestigungsabschnitte (36, 37) zur festen und dichtenden Aufnahme von Randabschnitten eines zugeordneten Dichtelementes (41) derart aufweist, dass ein durch den mindestens einen Verbindungskanal (39) zugeführter, auf das Dichtelement (41) wirkender Überdruck eine zur Außenseite hin gerichtete Aufweitung des Dichtelementes (22) im Bereich des Dichtelement-Aufnahmeabschnitts (38) bewirkt.

35. Filterelement nach Anspruch 34,
**dadurch gekennzeichnet,**
**dass** das Dichtelement (41) als umlaufende, ringförmige Sonderformdichtung (41) ausgebildet ist.

36. Filterelement nach wenigstens einem der Ansprüche 34 bis 35,
**dadurch gekennzeichnet,**
**dass** der Kragenabschnitt (14) zwei Dichtelement-Befestigungsabschnitte (36, 37) aufweist, welche vorzugsweise jeweils in Form einer den Kragenabschnitt (14) umlaufenden Aufnahmerille zur festen Aufnahme der Randabschnitte des Dichtelementes (41) unter geringer radialer Vorspannung des Dichtelementes (41) ausgebildet sind.

37. Filterelement nach wenigstens einem der Ansprüche 34 bis 36,
**dadurch gekennzeichnet ,**
**dass** der Kragenabschnitt (14) mehrere Bohrungen (39) als Verbindungskanäle zwischen dem zweiten Strömungskanal (10) und dem Dichtelement-Aufnahmeabschnitt (38) aufweist.

38. Filterelement nach wenigstens einem der Ansprüche 34 bis 37,
**dadurch gekennzeichnet,**
**dass** der Kragenabschnitt (14) einen Anschlagabschnitt (47) aufweist.

39. Filterelement nach wenigstens einem der Ansprüche 34 bis 38,
**dadurch gekennzeichnet,**
**dass** im Bereich des Dichtelement-Aufnahmeabschnitts (38) zwischen dem Dichtelement (41) und dem Kragenabschnitt (14) ein umlaufender oder in mehrere Abschnitte unterteilter Freiraum (40) vorgesehen ist, welcher mit dem mindestens einen Verbindungskanal (39) in fluidem Strömungskontakt steht.

40. Druckluftfilter (1) zum Abscheiden von Fremdstoffen aus einem Druckluftstrom, mit:
einem Filterelement(5), welches nach wenigstens einem der Ansprüche 47 bis 53 ausgebildet ist; und
einem das Filterelement (5) dichtend aufnehmenden Filtergehäuse (2), welches einen Gehäusekopf (3) mit einer dem Dichtelement (41) des Filterelements (5) zugeordneten, zumindest abschnittsweise innenumfänglich vorgesehenen ersten Dichtfläche (23) und eine Gehäuseglocke (4) mit einer dem Dichtelement (41) des Filterelements (5) zugeordneten, zumindest abschnittsweise stirnseitig vorgesehenen zweiten Dichtfläche (24) aufweist;
wobei die Gehäuseglocke (4) mittels einer Schließbewegung des Filtergehäuses (2) mit dem Gehäusekopf (3) zum Bilden einer dichtenden Schließstellung verbindbar ist; und
wobei das Filterelement (5) derart mit dem Gehäusekopf (3) und der Gehäuseglocke (4) koppelbar ist, dass sich das Dichtelement (41) in der Schließstellung des Filtergehäuses (2) bei Auftreten eines Überdrucks durch den mindestens einen Verbindungskanal (39) hindurch im Bereich des Dichtelement-Aufnahmeabschnitts (38) in dichtende Anlage mit der ersten Dichtfläche (23) des Gehäusekopfes (3) sowie in dichtende Anlage mit der zweiten Dichtfläche (24) der Gehäuseglocke (4) aufweitet.

41. Druckluftfilter nach Anspruch 40,
**dadurch gekennzeichnet,**
**dass** das Dichtelement (41) als umlaufende, ringförmige Sonderformdichtung (41) ausgebildet ist.

42. Druckluftfilter nach Anspruch 40 oder 41,
**dadurch gekennzeichnet,**
**dass** das Dichtelement (41) im Bereich seiner Randabschnitte leicht deformierbare Dichtlippen (42, 43) aufweist.

43. Druckluftfilter nach wenigstens einem der Ansprüche 40 bis 42,
**dadurch gekennzeichnet,**
**dass** der Kragenabschnitt (14) des Filterelementes (5) zwei Dichtelement-Befestigungsabschnitte (36, 37) aufweist, welche vorzugsweise jeweils in Form einer den Kragenabschnitt (14) umlaufenden Aufnahmerille zur festen Aufnahme der Randabschnitte des Dichtelementes (41) unter geringer radialer Vorspannung des Dichtelementes (41) ausgebildet sind.

44. Druckluftfilter nach wenigstens einem der Ansprüche 40 bis 43,
**dadurch gekennzeichnet,**
**dass** der Kragenabschnitt (14) des Filterelementes (5) mehrere Bohrungen (39) als Verbindungskanäle zwischen dem zweiten Strömungskanal (10) und dem Dichtelement-Aufnahmeabschnitt (38) aufweist.

45. Druckluftfilter nach wenigstens einem der Ansprüche 40 bis 44,
**dadurch gekennzeichnet,**
**dass** der Kragenabschnitt (14) des Filterelementes (5) einen Anschlagabschnitt (47) aufweist, welcher für einen axialen Anschlag in vorbestimmter Weise mit einer zugeordneten Anlagefläche (48) der Gehäuseglocke (4) in Anlage bringbar ist.

46. Druckluftfilter nach wenigstens einem der Ansprüche 40 bis 45,
**dadurch gekennzeichnet,**
**dass** im Bereich des Dichtelement-Aufnahmeabschnitts (38) zwischen dem Dichtelement (41) und dem Kragenabschnitt (14) ein umlaufender oder in mehrere Abschnitte unterteilter Freiraum (40) vorgesehen ist, welcher mit dem mindestens einen Verbindungskanal (39) in fluidem Strömungskontakt steht, wobei der Freiraum (40) in etwa diametral des abzudichtenden Raumes zwischen der ersten Dichtfläche (23) des Gehäusekopfes (3) und der zweiten Dichtfläche (24) der Gehäuseglocke (4) auf der gegenüberliegenden Seite des Dichtelementes (41) vorgesehen ist.

47. Druckluftfilter nach wenigstens einem der Ansprüche 40 bis 46,
**dadurch gekennzeichnet,**
**dass** das Dichtelement (41) in seinen geometrischen Abmessungen an die Formen der ersten Dichtfläche (23) des Gehäusekopfes (3) und der zweiten Dichtfläche (24) der Gehäuseglocke (4) derart angepasst ist, dass das Dichtelement (41) in den abzudichtenden Raum zwischen der ersten Dichtfläche (23) und der zweiten Dichtfläche (24) in der Schließstellung des Filtergehäuses (2) einpassbar ist.

48. Druckluftfilter nach wenigstens einem der Ansprüche 42 bis 47,
**dadurch gekennzeichnet,**
**dass** die Dichtlippen (42, 43) des Dichtelementes (41) in ihren geometrischen Abmessungen derart ausgestaltet sind, dass in der Schließstellung des Filtergehäuses (2) die eine Dichtlippe (42) in dichtende Anlage mit der ersten Dichtfläche (23) bzw. einer zugeordneten inneren Umfangsfläche des Gehäusekopfes (3) und die andere Dichtlippe (43) in dichtende Anlage mit einer zugeordneten inneren Umfangsfläche der Gehäuseglocke (4) bringbar ist, wobei das Dichtelement (41) derart mit einem Überdruck beaufschlagbar ist, dass das Dichtelement (41) an die erste Dichtfläche (23) und die zweite Dichtfläche (24) in verstärkte dichtende Anlage anpressbar ist.

49. Filterelement (5) zum Abscheiden von Fremdstoffen aus einem Druckluftstrom, mit:
einem Elementboden (6);
einem Elementkopf (7), welcher einen einen ersten Strömungskanal (9) bildenden Halsabschnitt (13) und einen Kragenabschnitt (14) aufweist, der den Halsabschnitt (13) zumindest abschnittsweise umlaufend ausgebildet und unter Bildung eines zweiten Strömungskanals (10) mit dem Halsabschnitt (13) verbunden ist; und
einem Filtermedium (8), welches mit dem Elementboden (6) und dem Elementkopf (7) zum Bilden eines Gasströmungspfades zwischen dem ersten Strömungskanal (9) und dem zweiten Strömungskanal (10) durch das Filtermedium (8) hindurch dichtend verbunden ist;
wobei der Kragenabschnitt (14) eine zumindest abschnittsweise außenumfänglich vorgesehene Anlagefläche (16) zur Aufnahme eines zugeordneten Dichtelementes (22) derart aufweist, dass das Dichtelement (22) ohne weitere Krafteinwirkung eine vorbestimmte radiale Erstreckung aufweist und bei einer in etwa axial aus Richtung des Elementbodens (6) auf das Dichtelement (22) wirkenden Kraft aufgrund der Anlage des Dichtelementes (22) an der Anlagefläche (16) eine vorbestimmte radiale Aufweitung erfährt.

50. Druckluftfilter (1) zum Abscheiden von Fremdstoffen aus einem Druckluftstrom, mit:
einem Filterelement (5), welches nach Anspruch 65 ausgebildet ist; und
einem das Filterelement (5) dichtend aufnehmenden Filtergehäuse (2), welches einen Gehäusekopf (3) mit einer dem Dichtelement (22) des Filterelementes (5) zugeordneten, zumindest abschnittsweise innenumfänglich vorgesehenen ersten Dichtfläche (23) und eine Gehäuseglocke (4) mit einer dem Dichtelement (22) des Filterelementes (5) zugeordneten, zumindest abschnittsweise stirnseitig vorgesehenen zweiten Dichtfläche (24) aufweist;
wobei die Gehäuseglocke (4) mittels einer Schließbewegung des Filtergehäuses (2) mit dem Gehäusekopf (3) zum Bilden einer dichtenden Schließstellung verbindbar ist; und
wobei das Filterelement (5) derart mit dem Gehäusekopf (3) und der Gehäuseglocke (4) koppelbar ist, dass die Schließbewegung des Filtergehäuses (2) eine in etwa axial aufeinander zu gerichtete Relativbewegung zwischen dem Kragenabschnitt (14) des Filterelementes (5) und der Gehäuseglocke (4) bewirkt, wodurch die zweite Dichtfläche (24) der Gehäuseglocke (4) das Dichtelement (22) aufgrund der in etwa axialen Krafteinwirkung durch die zweite Dichtfläche (24) und der Anlage des Dichtelementes (22) an der Anlagefläche (16) des Kragenabschnitts (14) des Filterelements (5) in dichtende Anlage mit der ersten Dichtfläche (23) des Gehäusekopfes (3) radial aufweitet.

## Claims

1. Filter element (5) for separating foreign bodies from a compressed air stream, having:
- an element lower portion (6);
- an element upper portion (7) which has a neck portion (13), which forms a first flow channel (9), and a collar portion (14) which is formed so as to extend at least in sections around the neck portion (13) and is connected to the neck portion (13) thus forming a second flow channel (10); and
- a filter medium (8) which is sealingly connected to the element lower portion (6) and the element upper portion (7) for forming a gas flow path between the first flow channel (9) and the second flow channel (10) through the filter medium (8);
wherein the collar portion (14) has an abutment surface (16), which is provided at least in sections at the outer periphery and tapers in the direction of the element lower portion (6), for receiving an associated sealing element (22) such that a force which acts approximately axially on the sealing element (22) from the direction of the element lower portion (6) effects a radial expansion of the sealing element (22) along the abutment surface (16).

2. Filter element as claimed in claim 1,
**characterised in that**
the collar portion (14) is formed so as to extend around the entire periphery of the neck portion (13) and is formed in a substantially rotationally symmetrical manner with respect to the centre axis (46) of the filter element (5).

3. Filter element as claimed in claim 1 or 2,
**characterised in that**
the abutment surface (16) of the collar portion (14) is formed so as to extend around the entire periphery and is formed in a substantially rotationally symmetrical manner with respect to the centre axis (46) of the filter element (5).

4. Filter element as claimed in at least one of the preceding claims,
**characterised in that**
the abutment surface (16) of the collar portion (14) is formed as a cone surface whose pitch angle (α) between the abutment surface (16) and the centre axis (46) of the filter element (5) is preferably between 25° and 65°.

5. Filter element as claimed in at least one of the preceding claims,
**characterised in that**
the collar portion (14) has a delimiting rib (17) which delimits the abutment surface (16) in the direction of the element upper portion (7) and which is preferably formed in a peripheral manner and so as to be substantially rotationally symmetrical with respect to the centre axis (46) of the filter element (5).

6. Filter element as claimed in at least one of the preceding claims,
**characterised in that**
the sealing element is formed as a sealing ring (22) and can be drawn on the collar portion (14) in a predetermined holding position with slight radial pretensioning, wherein the sealing ring (22) has in the predetermined holding position an outer diameter which at most is slightly greater than the outer diameter of the delimiting rib (17) of the collar portion (14) delimiting the abutment surface (16).

7. Filter element as claimed in at least one of the preceding claims,
**characterised in that**
the sealing element (22) is formed as an O-ring seal with a substantially circular cross-section.

8. Filter element as claimed in at least one of the preceding claims,
**characterised in that**
the abutment surface (16) of the collar portion (14) is formed so as to be resiliently deformable for maintaining permanent, resilient pretensioning of the sealing element (22), wherein the abutment surface (16) of the collar portion (14) has a plurality of radially disposed and resiliently deformable segments.

9. Filter element as claimed in at least one of the preceding claims,
**characterised in that**
the collar portion (14) is fixedly connected to the neck portion (13) by means of a plurality of ribs (15), wherein the plurality of ribs (15) are preferably configured in an optimised manner in terms of fluid engineering.

10. Filter element as claimed in at least one of the preceding claims,
**characterised in that**
the neck portion (13) is configured to have a cross-section which is different from the circular shape and/or has an eccentric position relative to the centre axis (46) of the filter element (5).

11. Filter element as claimed in at least one of the preceding claims,
**characterised in that**
the element upper portion (7) has at least one optical, acoustic and/or haptic angular position indication device.

12. Filter element as claimed in at least one of the preceding claims,
**characterised in that**
the collar portion (14) has at least one engagement device as a haptic angular position indication device.

13. Filter element as claimed in at least one of the preceding claims,
**characterised in that**
the element upper portion (7) has a cylindrical guide portion (19) which faces the element lower portion (6) and has a plurality of resiliently deformable resilient tongues (27) whose free ends are disposed in an axial direction facing the neck portion (13) and at a different axial level, and whose radial extension corresponds approximately to the radial extension of the sealing ring (22) in the holding position to support same.

14. Filter element as claimed in at least one of the preceding claims,
**characterised in that**
the collar portion (14) has an axial stop portion (28).

15. Filter element as claimed in at least one of claims 1 to 12 or 14,
**characterised in that**
the collar portion (14) has at least one engagement device (30) for an engaging connection (29) with an associated counter-engagement device of a filter housing, wherein the at least one engagement device (30) has a plurality of catches (30) which are formed as extensions of the collar portion (14), which are resilient in the radial direction, in the direction of the element lower portion (6) and which each have at least one receiving region (31) for an engaging receiver of the respectively associated counter-engagement device, wherein at least some lateral outer edges (32, 33) of each catch (30) facing the element lower portion (6) are formed in each case in a correspondingly chamfered manner to provide a relatively flat sliding ramp.

16. Filter element as claimed in claim 15,
**characterised in that**
at least some lateral edges (34) of the at least one receiving region (31) of a respective catch (30) are formed in each case in a correspondingly chamfered manner to provide a relatively steep sliding ramp.

17. Filter element as claimed in any one of claims 15 or 16,
**characterised in that**
the catches (30) are each formed in such a manner that they assume a radially non-deformed state during the engaging connection (29) with the associated counter-engagement device and during the rest position, in which the catches (30) are each out of engagement with the associated counter-engagement device.

18. Compressed air filter (1) for separating foreign bodies from a compressed air stream, having:
- a filter element (5) which is formed as claimed in at least one of the preceding claims; and
- a filter housing (2) which receives the filter element (5) in a sealing manner and which has a housing upper portion (3) having a first sealing surface (23), which is associated with the sealing element (22) of the filter element (5) and which is provided at least in sections on the inner periphery, and a housing cap (4) having a second sealing surface (24) which is associated with the sealing element (22) of the filter element (5) and which is provided at least in sections on the end side;
wherein the housing cap (4) can be connected to the housing upper portion (3) by means of a closing movement of the filter housing (2) to form a sealing closed position; and
wherein the filter element (5) can be coupled to the housing upper portion (3) and the housing cap (4) in such a manner that the closing movement of the filter housing (2) effects a relative movement, which is directed approximately axially towards each other, between the collar portion (14) of the filter element (5) and the housing cap (4), whereby the second sealing surface (24) of the housing cap (4) radially expands the sealing element (22) by reason of a sealing advance movement along the abutment surface (16) of the collar portion (14) of the filter element (5) into sealing abutment with the first sealing surface (23) of the housing upper portion (3).

19. Compressed air filter as claimed in claim 18,
**characterised in that**
the housing upper portion (3) has a receiving contour (25) which is adapted to the shape of the neck portion (13) of the filter element (5) to form a means to prevent rotation of the filter element (5) relative to the housing upper portion (3) of the filter housing (2).

20. Compressed air filter as claimed in claim 18 or 19,
**characterised in that**
the sealing element (22) is formed as a sealing ring (22) and has in its holding position an outer diameter which is less than or equal to the diameter of the first sealing surface (23) of the housing upper portion (3).

21. Compressed air filter as claimed in any one of claims 18 to 20,
**characterised in that**
the housing cap (4), the housing upper portion (3) and/or the element upper portion (7) of the filter element (5) have at least one optical, acoustic and/or haptic angular position indication device (26; 30, 31, 35) to indicate in each case relative positions with respect to each other.

22. Compressed air filter as claimed in at least one of claims 18 to 21,
**characterised in that**
the housing cap (4) can be connected to the housing upper portion (3) by means of a threaded connection and/or bayonet connection (12), preferably by means of a bayonet connection (12) without any pitch, or a similar rotary connection.

23. Compressed air filter as claimed in at least one of claims 18 to 22,
**characterised in that**
the element upper portion (7) comprises a cylindrical guide portion (19) which faces the element lower portion (6) and has an outer thread (20).

24. Compressed air filter as claimed in claim 23,
**characterised in that**
the housing cap (4) has an inner thread (21), which corresponds to the outer thread (20) of the element upper portion (7), for a threaded engagement (11).

25. Compressed air filter as claimed in at least one of claims 18 to 22,
**characterised in that**
the element upper portion (7) has a cylindrical guide portion (19) which faces the element lower portion (6) and has a plurality of resiliently deformable resilient tongues (27) whose free ends are disposed in an axial direction facing the neck portion (13) and at a different axial level, and whose radial extensions and configurations allow the sealing element (22) to be supported in a predetermined holding position, wherein the housing cap (4) has an inner thread (21) which corresponds to the resiliently deformable resilient tongues (27) of the element upper portion (7), wherein the inner thread (21) of the housing cap (4) has a saw-toothlike profile.

26. Compressed air filter as claimed in claim 25,
**characterised in that**
the inner thread (21) of the housing cap (4) runs out axially in the direction of the second sealing surface (24) of the housing cap (4).

27. Compressed air filter as claimed in at least one of claims 18 to 21,
**characterised in that**
the housing cap (4) can be connected to the housing upper portion (3) by means of a bayonet connection (12) having a predetermined pitch.

28. Compressed air filter as claimed in at least one of claims 18 to 22 or 25 to 27,
**characterised in that**
the collar portion (14) has an axial stop device (28) for an axial stop against an associated stop surface of the housing upper portion (3), preferably against the end side of the collar portion (14) facing the housing upper portion (3).

29. Compressed air filter as claimed in at least one of claims 18 to 21, 27 or 28,
**characterised in that**
the collar portion (14) has at least one engagement device (30) for an engaging connection (29) with an associated counter-engagement device (35) of the housing cap (4), wherein the at least one engagement device (30) has a plurality of catches (30) which are formed as extensions of the collar portion (14), which are resilient in the radial direction, in the direction of the element lower portion (6) and which each have at least one receiving region (31) for an engaging receiver of the respectively associated counter-engagement device (35) of the housing cap (4), wherein at least some lateral outer edges (32, 33) of each catch (30) facing the element lower portion (6) are formed in each case in a correspondingly chamfered manner to provide a relatively flat sliding ramp, wherein at least some lateral edges (34) of the at least one receiving region (31) of a catch (30) are formed in each case in a correspondingly chamfered manner to provide a relatively steep sliding ramp, wherein the catches (30) are each formed in such a manner that they assume in each case a radially non-deformed state during the engaging connection (29) with the associated counter-engagement device (35) and during the rest position, in which the catches (30) are each out of engagement with the associated counter-engagment device (35).

30. Compressed air filter as claimed in at least one of claims 28 or 29,
**characterised in that**
the filter element (5) can be coupled to the housing upper portion (3) and the housing cap (4) in such a manner that the closing movement of the filter housing (2) moves the axial stop device (28) of the collar portion (14) of the filter element (5) into axial abutment with the associated stop surface of the housing upper portion (3) for a relative movement, which is directed approximately axially towards each other, between the filter element (5) and the housing cap (4).

31. Compressed air filter as claimed in at least one of claims 18 to 21 or 27 to 30,
**characterised in that**
provided between the collar portion (14) of the filter element (5) and the housing cap (4) is a corresponding stop for an axial support of the filter element (5) to prevent a movement in the direction of the housing cap (4), preferably in the form of a corresponding shoulder on the filter element (5) and/or the housing cap (4).

32. Compressed air filter as claimed in at least one of claims 29 to 31,
**characterised in that**
the inner wall of the housing cap (4) has the at least one counter-engagement device (35) for an engaging connection (29) with the at least one engagement device (30) of the collar portion (14) of the filter element (5), wherein the at least one counter-engagement device (35) comprises a plurality of engaging projections (35) which are provided on the inner wall of the housing cap (4) such that they can be moved in a latching manner into engagement with the respectively associated catches (30) when the bayonet connection (12) is in the open position.

33. Compressed air filter as claimed in at least one of claims 29 to 32,
**characterised in that**
the catches (30) of the filter element (5) each have lateral outer edges (32) which are chamfered in a relatively flat manner and lateral edges (34) of the opening (31) which are chamfered steeply in relation thereto to form a haptic preferential angular position, in which the counter-engagement device (35) is in engagement with the respectively associated catches (30), wherein in the preferential angular position the neck portion (13) of the filter element (5) can be moved axially into engagement with the receiving contour (25) in the housing upper portion (3) and the bayonet connection (12) can be moved axially into engagement between the housing cap (4) and the housing upper portion (3).

34. Filter element (5) for separating foreign bodies from a compressed air stream, having:
- an element lower portion (6);
- an element upper portion (7) which has a neck portion (13), which forms a first flow channel (9), and a collar portion (14) which is formed so as to extend at least in sections around the neck portion (13) and is connected to the neck portion (13) thus forming a second flow channel (10); and
- a filter medium (8) which is sealingly connected to the element lower portion (6) and the element upper portion (7) to form a gas flow path between the first flow channel (9) and the second flow channel (10) through the filter medium (8);
wherein the collar portion (14) has a sealing element receiving portion (38), which is provided at least in sections on the outer periphery, at least one connection channel (39) between one of the two flow channels (9, 10) and the sealing element receiving portion (38), and sealing element fixing portions (36, 37) which axially delimit the sealing element receiving portion (38) for fixedly and sealingly receiving edge portions of an associated sealing element (41) in such a manner that an excess pressure which is supplied by the at least one connection channel (39) and acts on the sealing element (41) effects an expansion of the sealing element (22), which is directed towards the outer side, in the region of the sealing element receiving portion (38).

35. Filter element as claimed in claim 34,
**characterised in that**
the sealing element (41) is formed as a peripheral, annular, specially-shaped seal (41).

36. Filter element as claimed in at least one of claims 34 to 35,
**characterised in that**
the collar portion (14) has two sealing element fixing portions (36, 37) which are preferably each formed in the manner of a receiving groove, which extends around the collar portion (14), for fixedly receiving the edge portions of the sealing element (41) with slight radial pretensioning of the sealing element (41).

37. Filter element as claimed in at least one of claims 34 to 36,
**characterised in that**
the collar portion (14) has a plurality of bores (39) as connection channels between the second flow channel (10) and the sealing element receiving portion (38).

38. Filter element as claimed in at least one of claims 34 to 37,
**characterised in that**
the collar portion (14) has a stop portion (47).

39. Filter element as claimed in at least one of claims 34 to 38,
**characterised in that**
provided in the region of the sealing element receiving portion (38) between the sealing element (41) and the collar portion (14) is a free space (40) which is peripheral or is divided into a plurality of portions and which is in fluid flow contact with the at least one connection channel (39).

40. Compressed air filter (1) for separating foreign bodies from a compressed air stream, having:
- a filter element (5) which is formed as claimed in at least one of claims 47 to 53; and
- a filter housing (2) which sealingly receives the filter element (5) and has a housing upper portion (3) having a first sealing surface (23), which is associated with the sealing element (41) of the filter element (5) and which is provided at least in sections on the inner periphery, and a housing cap (4) having a second sealing surface (24) which is associated with the sealing element (41) of the filter element (5) and is provided at least in sections on the end side;
wherein the housing cap (4) can be connected to the housing upper portion (3) by means of a closing movement of the filter housing (2) to form a sealing closed position;
and
wherein the filter element (5) can be coupled to the housing upper portion (3) and the housing cap (4) such that the sealing element (41) expands in the closed position of the filter housing (2) when an excess pressure occurs through the at least one connection channel (39) in the region of the sealing element receiving portion (38) into sealing abutment with the first sealing surface (23) of the housing upper portion (3) and into sealing abutment with the second sealing surface (24) of the housing cap (4).

41. Compressed air filter as claimed in claim 40,
**characterised in that**
the sealing element (41) is formed as a peripheral, annular, specially-shaped seal (41).

42. Compressed air filter as claimed in claim 40 or 41,
**characterised in that**
the sealing element (41) has readily deformable sealing lips (42, 43) in the region of its edge portions.

43. Compressed air filter as claimed in at least one of claims 40 to 42,
**characterised in that**
the collar portion (14) of the filter element (5) has two sealing element fixing portions (36, 37) which in each case are preferably formed in the manner of a receiving groove, which extends around the collar portion (14), for fixedly receiving the edge portions of the sealing element (41) with slight radial pretensioning of the sealing element (41).

44. Compressed air filter as claimed in at least one of claims 40 to 43,
**characterised in that**
the collar portion (14) of the filter element (5) has a plurality of bores (39) as connection channels between the second flow channel (10) and the sealing element receiving portion (38).

45. Compressed air filter as claimed in at least one of claims 40 to 44,
**characterised in that**
the collar portion (14) of the filter element (5) has a stop portion (47) which can be moved into abutment with an associated abutment surface (48) of the housing cap (4) in a predetermined manner for an axial stop.

46. Compressed air filter as claimed in at least one of claims 40 to 45,
**characterised in that**
provided in the region of the sealing element receiving portion (38) between the sealing element (41) and the collar portion (14) is a free space (40) which is peripheral or is divided into a plurality of portions and which is in fluid flow contact with the at least one connection channel (39), wherein the free space (40) is provided approximately diametrically with respect to the space to be sealed between the first sealing surface (23) of the housing upper portion (3) and the second sealing surface (24) of the housing cap (4) on the opposite side of the sealing element (41).

47. Compressed air filter as claimed in at least one of claims 40 to 46,
**characterised in that**
the sealing element (41) has its geometric dimensions adapted to the shapes of the first sealing surface (23) of the housing upper portion (3) and the second sealing surface (24) of the housing cap (4) such that the sealing element (41) can be fitted into the space to be sealed between the first sealing surface (23) and the second sealing surface (24) when the filter housing (2) is in the closed position.

48. Compressed air filter as claimed in at least one of claims 42 to 47,
**characterised in that**
the sealing lips (42, 43) of the sealing element (41) are configured to have such geometric dimensions that when the filter housing (2) is in the closed position one sealing lip (42) can be moved into sealing abutment with the first sealing surface (23) or an associated inner peripheral surface of the housing upper portion (3) and the other sealing lip (43) can be moved into sealing abutment with an associated inner peripheral surface of the housing cap (4), wherein the sealing element (41) can be subjected to excess pressure such that the sealing element (41) can be pressed against the first sealing surface (23) and the second sealing surface (24) into reinforced sealing abutment.

49. Filter element (5) for separating foreign bodies from a compressed air stream, having:
- an element lower portion (6);
- an element upper portion (7) which has a neck portion (13), which forms a first flow channel (9), and a collar portion (14) which is formed so as to extend at least in sections around the neck portion (13) and is connected to the neck portion (13) thus forming a second flow channel (10); and
- a filter medium (8) which is sealingly connected to the element lower portion (6) and the element upper portion (7) to form a gas flow path between the first flow channel (9) and the second flow channel (10) through the filter medium (8);
wherein the collar portion (14) has an abutment surface (16), which is provided at least in sections on the outer periphery, for receiving an associated sealing element (22) such that the sealing element (22) has a predetermined radial extension without further application of force and, when a force acts approximately axially on the sealing element (22) from the direction of the element lower portion (6), is subjected to predetermined radial expansion by reason of the abutment of the sealing element (22) against the abutment surface (16).

50. Compressed air filter (1) for separating foreign bodies from a compressed air stream, having:
- a filter element (5) which is formed as claimed in claim 65; and
- a filter housing (2) which receives the filter element (5) in a sealing manner and has a housing upper portion (3) having a first sealing surface (23), which is associated with the sealing element (22) of the filter element (5) and is provided at least in sections on the inner periphery, and a housing cap (4) having a second sealing surface (24) which is associated with the sealing element (22) of the filter element (5) and is provided at least in sections on the end side;
wherein the housing cap (4) can be connected to the housing upper portion (3) by means of a closing movement of the filter housing (2) to form a sealing closed position;
and
wherein the filter element (5) can be coupled to the housing upper portion (3) and the housing cap (4) such that the closing movement of the filter housing (2) effects a relative movement, which is directed approximately axially towards each other, between the collar portion (14) of the filter element (5) and the housing cap (4), whereby the second sealing surface (24) of the housing cap (4) radially expands the sealing element (22) by reason of the approximately axial application of force by means of the second sealing surface (24) and the abutment of the sealing element (22) against the abutment surface (16) of the collar portion (14) of the filter element (5) into sealing abutment with the first sealing surface (23) of the housing upper portion (3).

## Revendications

1. Élément filtrant (5) pour séparer des matières étrangères d'un flux d'air comprimé, comportant :
- un fond d'élément (6) ;
- une tête d'élément (7) comportant une portion en collet (13) formant un premier canal d'écoulement (9) et une portion en rebord (14) agencée pour entourer au moins par sections la portion en collet (13) et reliée à la portion en collet (13) en formant un deuxième canal d'écoulement (10) ; et
- un matériau filtrant (8) relié de manière étanche au fond d'élément (6) et à la tête d'élément (7) pour former un chemin d'écoulement gazeux entre le premier canal d'écoulement (9) et le deuxième canal d'écoulement (10) à travers le matériau filtrant (8) ;
dans lequel la portion en rebord (14) présente une surface d'appui (16), qui est prévue au moins par sections sur le pourtour extérieur et se rétrécit en direction du fond d'élément (6), pour recevoir un élément d'étanchéité (22) associé, de telle manière qu'une force agissant sensiblement axialement à partir de la direction du fond d'élément (6) sur l'élément d'étanchéité (22) provoque un élargissement radial de l'élément d'étanchéité (22) le long de la surface d'appui (16).

2. Élément filtrant selon la revendication 1, **caractérisé en ce que** la portion en rebord (14) est formée pour entourer le pourtour complet de la portion en collet (13) et essentiellement en symétrie de rotation par rapport à l'axe médian (46) de l'élément filtrant (5).

3. Élément filtrant selon la revendication 1 ou 2, **caractérisé en ce que** la surface d'appui (16) de la portion en rebord (14) est formée sur le pourtour complet et essentiellement en symétrie de rotation par rapport à l'axe médian (46) de l'élément filtrant (5).

4. Élément filtrant selon au moins une des revendications précédentes, **caractérisé en ce que** la surface d'appui (16) de la portion en rebord (14) est agencée sous forme de surface conique dont l'angle d'inclinaison (α) entre la surface d'appui (16) et l'axe médian (46) de l'élément filtrant (5) est de préférence compris entre 25° et 65°.

5. Élément filtrant selon au moins une des revendications précédentes, **caractérisé en ce que** la portion en rebord (14) présente une nervure de délimitation (17) délimitant la surface d'appui (16) en direction de la tête d'élément (7), qui est de préférence formée sur le pourtour complet et essentiellement en symétrie de rotation par rapport à l'axe médian (46) de l'élément filtrant (5).

6. Élément filtrant selon au moins une des revendications précédentes, **caractérisé en ce que** l'élément d'étanchéité est agencé sous forme d'anneau d'étanchéité (22) et peut être enfilé sur la portion en rebord (14) avec une légère précontrainte radiale dans une position prédéterminée de maintien, l'anneau d'étanchéité (22) en position prédéterminée de maintien ayant un diamètre extérieur au plus légèrement supérieur au diamètre extérieur de la nervure de délimitation (17) de la portion en rebord (14) délimitant la surface d'appui (16).

7. Élément filtrant selon au moins une des revendications précédentes, **caractérisé en ce que** l'élément d'étanchéité (22) est agencé sous forme de joint torique d'étanchéité ayant une section transversale essentiellement circulaire.

8. Élément filtrant selon au moins une des revendications précédentes, **caractérisé en ce que** la surface d'appui (16) de la portion en rebord (14) est formée de manière à être élastiquement déformable pour le maintien d'une précontrainte élastique permanente de l'élément d'étanchéité (22), la surface d'appui (16) de la portion en rebord (14) comportant plusieurs segments disposés radialement et déformables élastiquement.

9. Élément filtrant selon au moins une des revendications précédentes, **caractérisé en ce que** la portion en rebord (14) est solidement liée à la portion en collet (13) par le moyen de plusieurs nervures (15), chacune des plusieurs nervures étant de préférence techniquement optimisée en termes d'écoulement.

10. Élément filtrant selon au moins une des revendications précédentes, **caractérisé en ce que** la portion en collet (13) présente une section transversale différente de la forme circulaire et/ou une position excentrée par rapport à l'axe médian (46) de l'élément filtrant (5).

11. Élément filtrant selon au moins une des revendications précédentes, **caractérisé en ce que** la tête d'élément (7) comporte au moins un dispositif d'affichage optique, acoustique et/ou haptique de position angulaire.

12. Élément filtrant selon au moins une des revendications précédentes, **caractérisé en ce que** la portion en rebord (14) comporte au moins un dispositif d'encliquetage servant de dispositif d'affichage haptique de position angulaire.

13. Élément filtrant selon au moins une des revendications précédentes, **caractérisé en ce que** la tête d'élément (7) comporte une portion de guidage (19) cylindrique, orientée vers le fond d'élément (6), comportant plusieurs languettes élastiques (27) déformables élastiquement dont les extrémités libres sont orientées en direction axiale vers la portion en collet (13) et disposées à des niveaux axiaux différents et dont l'extension radiale correspond sensiblement à l'extension radiale de l'anneau d'étanchéité (22) en position de maintien pour l'appui de ce dernier.

14. Élément filtrant selon au moins une des revendications précédentes, **caractérisé en ce que** la portion en rebord (14) comporte une portion de butée axiale(28).

15. Élément filtrant selon au moins une des revendications 1 à 12 ou 14, **caractérisé en ce que** la portion en rebord (14) comporte au moins un dispositif d'encliquetage (30) pour une liaison d'encliquetage (29) avec un dispositif de contre-encliquetage associé d'un boîtier de filtre, l'au moins un dispositif d'encliquetage (30) comportant plusieurs cliquets (30) qui sont agencés sous forme de prolongements de la portion en rebord (14), élastiques en direction radiale, en direction du fond d'élément (6) et présentent chacun au moins une zone de réception (31) pour recevoir par encliquetage le dispositif de contre-encliquetage respectivement associé, au moins d'éventuels bords extérieurs (32, 33) latéraux et orientés vers le fond d'élément (6) de chaque cliquet (30) étant chacun biseautés de manière correspondante pour fournir une rampe de glissement relativement plate.

16. Élément filtrant selon la revendication 15, **caractérisé en ce qu'**au moins d'éventuels bords latéraux (34) de l'au moins une zone de réception (31) de chaque cliquet (30) sont chacun biseautés de manière correspondante pour fournir une rampe de glissement relativement raide.

17. Élément filtrant selon l'une des revendications 15 ou 16, **caractérisé en ce que** les cliquets (30) sont agencés chacun de manière à prendre chacun un état non déformé radialement, aussi bien en liaison d'encliquetage (29) avec le dispositif de contre-encliquetage associé qu'en position de repos dans laquelle les cliquets (30) sont chacun hors prise avec le dispositif de contre-encliquetage associé.

18. Filtre à air comprimé (1) pour séparer des matières étrangères d'un flux d'air comprimé, comportant :
- un élément filtrant (5) agencé selon au moins une des revendications précédentes ;
- et un boîtier de filtre (2) qui reçoit de façon étanche l'élément filtrant (5) et présente une tête de boîtier (3) comportant une première surface d'étanchéité (23), associée à l'élément d'étanchéité (25) de l'élément filtrant (5) et prévue au moins par sections sur le pourtour intérieur, et une cloche de boîtier (4) comportant une deuxième surface d'étanchéité (24), associée à l'élément d'étanchéité (22) de l'élément filtrant (5) et prévue au moins par sections sur le côté frontal,
la cloche de boîtier (4) pouvant être reliée à la tête de boîtier (3) par un mouvement de fermeture du boîtier de filtre (2) pour former une position de fermeture étanche ; et
l'élément filtrant (5) pouvant être couplé à la tête de boîtier (3) et à la cloche de boîtier (4) de telle manière que le mouvement de fermeture du boîtier de filtre (2) provoque un mouvement relatif sensiblement axial, l'une vers l'autre, entre la portion en rebord (14) de l'élément filtrant (5) et la cloche de boîtier (4), grâce auquel la deuxième surface d'étanchéité (24) de la cloche de boîtier (4) élargit radialement l'élément d'étanchéité (22) par un déplacement en avant étanchéificateur le long de la surface d'appui (16) de la portion en rebord (14) de l'élément filtrant (5) en appui d'étanchéité avec la première surface d'étanchéité (23) de la tête de boîtier (3).

19. Filtre à air comprimé selon la revendication 18, **caractérisé en ce que** la tête de boîtier (3) présente un contour de réception (25) adapté à la forme de la portion en collet (13) de l'élément filtrant (5) pour empêcher l'élément filtrant (5) de tourner par rapport à la tête de boîtier (3) du boîtier de filtre (2).

20. Filtre à air comprimé selon la revendication 18 ou 19, **caractérisé en ce que** l'élément d'étanchéité (22) est agencé sous forme d'anneau d'étanchéité (22) et présente dans sa position de maintien un diamètre extérieur inférieur ou égal au diamètre de la première surface d'étanchéité (23) de la tête de boîtier (3).

21. Filtre à air comprimé selon au moins une des revendications 18 à 20, **caractérisé en ce que** la cloche de boîtier (4), la tête de boîtier (3) et/ou la tête d'élément (7) de l'élément filtrant (5) comportent au moins un dispositif d'affichage optique, acoustique et/ou haptique de position angulaire (26 ; 30, 31, 35), destinée à afficher respectivement des positions relatives les unes par rapport aux autres.

22. Filtre à air comprimé selon au moins une des revendications 18 à 21, **caractérisé en ce que** la cloche de boîtier (4) peut être reliée à la tête de boîtier (3) par le moyen d'une liaison à filetage et/ou à baïonnette (12), de préférence une liaison à baïonnette (12) sans pas, ou une liaison rotative équivalente.

23. Filtre à air comprimé selon au moins une des revendications 18 à 22, **caractérisé en ce que** la tête d'élément (7) comprend une portion de guidage (19) cylindrique, orientée vers le fond d'élément (6), comportant un filet extérieur (20).

24. Filtre à air comprimé selon la revendication 23, **caractérisé en ce que** la cloche de boîtier (4) présente un filet intérieur (21), destiné à une liaison filetée (11), qui correspond au filet extérieur (20) de la tête d'élément (7).

25. Filtre à air comprimé selon au moins une des revendications 18 à 22, **caractérisé en ce que** la tête d'élément (7) présente une portion de guidage (19) cylindrique orientée vers le fond d'élément (6) et comportant plusieurs languettes élastiques (27) déformables élastiquement dont les extrémités libres sont orientées en direction axiale vers la portion en collet (13) et disposées à des niveaux axiaux différents et dont l'extension et la configuration radiales permettent un appui de l'élément d'étanchéité (22) dans une position de maintien, la cloche de boîtier (4) présentant un filet intérieur (21) qui correspond aux languettes élastiques (27) déformables élastiquement de la tête d'élément (7), le filet intérieur (21) de la cloche de boîtier (4) ayant un profil en dents de scie.

26. Filtre à air comprimé selon la revendication 25, **caractérisé en ce que** le filet intérieur (21) de la cloche de boîtier (4) se termine axialement en direction de la deuxième surface d'étanchéité (24) de la cloche de boîtier (4).

27. Filtre à air comprimé selon au moins une des revendications 18 à 21, **caractérisé en ce que** la cloche de boîtier (4) peut être reliée selon une inclinaison prédéterminée à la tête de boîtier (3) par le moyen d'une liaison à baïonnette (12).

28. Filtre à air comprimé selon au moins une des revendications 18 à 22 ou 25 à 27, **caractérisé en ce que** la portion en rebord (14) comporte un dispositif de butée (28) axiale pour une butée axiale contre une surface de butée associée de la tête de boîtier (3), de préférence sur le côté frontal, orienté vers la tête de boîtier (3), de la portion en rebord (14).

29. Filtre à air comprimé selon au moins une des revendications 18 à 21, 27 ou 28, **caractérisé en ce que** la portion en rebord (14) comporte au moins un dispositif d'encliquetage (30) pour une liaison d'encliquetage (29) avec un dispositif de contre-encliquetage (35) associé de la cloche de boîtier (4), l'au moins un dispositif d'encliquetage (30) comportant plusieurs cliquets (30) qui sont agencés sous forme de prolongements de la portion en rebord (14), élastiques en direction radiale, en direction du fond d'élément (6) et présentent chacun au moins une zone de réception (31) pour recevoir par encliquetage le dispositif de contre-encliquetage (35) respectivement associé de la cloche de boîtier (4), au moins d'éventuels bords extérieurs (32, 33) latéraux et orientés vers le fond d'élément (6) de chaque cliquet (30) étant chacun biseautés de manière correspondante pour fournir une rampe de glissement relativement plate, au moins d'éventuels bords (34) latéraux de l'au moins une zone de réception (31) d'un cliquet (30) étant chacun biseautés de manière correspondante pour fournir une rampe de glissement relativement raide,
les cliquets (30) étant chacun agencés de manière à prendre chacun un état non déformé radialement, aussi bien en liaison d'encliquetage (29) avec le dispositif de contre-encliquetage associé qu'en position de repos dans laquelle les cliquets (30) sont chacun hors prise avec le dispositif de contre-encliquetage (35) associé.

30. Filtre à air comprimé selon au moins une des revendications 28 ou 29, **caractérisé en ce que** l'élément filtrant (5) peut être couplé à la tête de boîtier (3) et à la cloche de boîtier (4) de telle manière que le mouvement de fermeture du boîtier de filtre (2) amène le dispositif de butée (28) axiale de la portion en rebord (14) de l'élément filtrant (5) en appui axial avec la surface de butée associée de la tête de boîtier (3) pour un mouvement relatif sensiblement axial, l'un vers l'autre, entre l'élément filtrant (5) et la cloche de boîtier (4).

31. Filtre à air comprimé selon au moins une des revendications 18 à 21 ou 27 à 30, **caractérisé en ce qu'**une butée correspondante est prévue, entre la portion en rebord (14) de l'élément filtrant (5) et la cloche de boîtier (4), pour un appui axial de l'élément filtrant (5) contre un mouvement en direction de la cloche de boîtier (4), de préférence sous forme d'un épaulement correspondant sur l'élément filtrant (5) et/ou la cloche de boîtier (4).

32. Filtre à air comprimé selon au moins une des revendications 29 à 31, **caractérisé en ce que** la paroi intérieure de la cloche de boîtier (4) comporte l'au moins un dispositif de contre-encliquetage (35) pour une liaison d'encliquetage (29) avec l'au moins un dispositif d'encliquetage (30) de la portion en rebord (14) de l'élément filtrant (5), l'au moins un dispositif de contre-encliquetage (35) comprenant plusieurs taquets d'encliquetage (35) prévus sur la paroi intérieure de la cloche de boîtier (4) de manière à pouvoir entrer en prise par encliquetage avec les cliquets (30) respectivement associés dans la position d'ouverture de la liaison à baïonnette (12).

33. Filtre à air comprimé selon au moins une des revendications 29 à 32, **caractérisé en ce que** les cliquets (30) de l'élément filtrant (5) comportent chacun des bords extérieurs (32) latéraux à biseau relativement plat, et par rapport à ceux-ci des bords (34) latéraux à biseau relativement raide de l'ouverture (31) pour former une position angulaire préférentielle haptique dans laquelle le dispositif de contre-encliquetage (35) est axialement en prise avec les cliquets (30) respectivement associés, en position angulaire préférentielle, la portion en collet (13) de l'élément filtrant (5), de même que la liaison à baïonnette (12) entre la cloche de boîtier (4) et la tête de boîtier (3), pouvant axialement entrer en prise avec le contour de réception (25) dans la tête de boîtier (3).

34. Élément filtrant (5) pour séparer des matières étrangères d'un flux d'air comprimé, comportant :
- un fond d'élément (6) ;
- une tête d'élément (7) comportant une portion en collet (13) formant un premier canal d'écoulement (9) et une portion en rebord (14) agencée pour entourer au moins par sections portion la portion en collet (13) et reliée à la portion en collet (13) en formant un deuxième canal d'écoulement (10) ; et
- un matériau filtrant (8) relié de manière étanche au fond d'élément (6) et à la tête d'élément (7) pour former un chemin d'écoulement gazeux entre le premier canal d'écoulement (9) et le deuxième canal d'écoulement (10) à travers le matériau filtrant (8) ;
la portion en rebord (14) comportant une portion de réception (38) de l'élément d'étanchéité prévue au moins par sections sur le pourtour extérieur, au moins un canal de liaison (39) entre un des deux canaux d'écoulement (9, 10) et la portion de réception (38) de l'élément d'étanchéité ainsi que des portions de fixation de l'élément d'étanchéité (36, 37) délimitant axialement la portion de réception (38) de l'élément d'étanchéité pour recevoir de manière étanche et solide les portions de bord d'un élément d'étanchéité (41) associé, de telle manière qu'une surpression qui agit sur l'élément d'étanchéité (41) amenée par l'intermédiaire de l'au moins un canal de liaison (39) provoque un élargissement, orienté vers le côté extérieur, de l'élément d'étanchéité (22) au niveau de la portion de réception de l'élément d'étanchéité (38).

35. Élément filtrant selon la revendication 34, **caractérisé en ce que** l'élément d'étanchéité (41) est agencée sous forme de joint d'étanchéité à forme spéciale (41) annulaire et périphérique.

36. Élément filtrant selon au moins une des revendications 34 à 35, **caractérisé en ce que** la portion en rebord (14) présente deux portions de fixation d'élément d'étanchéité (36, 37) de préférence étant chacune agencées sous forme d'une rainure de réception entourant la portion en rebord (14) pour recevoir solidement les portions de bord de l'élément d'étanchéité (41) avec une légère précontrainte radiale de l'élément d'étanchéité (41).

37. Élément filtrant selon au moins une des revendications 34 à 36, **caractérisé en ce que** la portion en rebord (14) comporte plusieurs perçages (39) servant de canaux de liaison entre le deuxième canal d'écoulement (10) et la portion de réception de l'élément d'étanchéité (38).

38. Élément filtrant selon au moins une des revendications 34 à 37, **caractérisé en ce que** la portion en rebord (14) comporte une portion de butée (47).

39. Élément filtrant selon au moins une des revendications 34 à 38, **caractérisé en ce qu'**un espace libre (40) périphérique ou subdivisé en plusieurs portions est prévu au niveau de la portion de réception de l'élément d'étanchéité (38) entre l'élément d'étanchéité (41) et la portion en rebord (14), lequel espace libre est fluidiquement en contact avec l'au moins un canal de liaison (39)

40. Filtre à air comprimé (1) pour séparer des matières étrangères d'un flux d'air comprimé, comportant :
- un élément filtrant (5) agencé selon au moins une des revendications 47 à 53 ; et
- et un boîtier de filtre (2) recevant de façon étanche l'élément filtrant (5), qui présente une tête de boîtier (3) comportant une première surface d'étanchéité (23), associée à l'élément d'étanchéité (41) de l'élément filtrant (5) et prévue au moins par sections sur le pourtour intérieur, et une cloche de boîtier (4) comportant une deuxième surface d'étanchéité (24), associée à l'élément d'étanchéité (41) de l'élément filtrant (5) et prévue au moins par sections sur le côté frontal ;
la cloche de boîtier (4) pouvant être reliée à la tête de boîtier (3) par un mouvement de fermeture du boîtier de filtre (2) pour former une position de fermeture étanche ; et
l'élément filtrant (5) pouvant être couplé à la tête de boîtier (3) et à la cloche de boîtier (4) de telle manière que, dans la position de fermeture du boîtier de filtre (2), l'élément d'étanchéité (41) s'élargit à l'apparition d'une surpression à travers l'au moins un canal de liaison (39) au niveau de la portion de réception de l'élément d'étanchéité (38) en appui d'étanchéité avec la première surface d'étanchéité (23) de la tête de boîtier ainsi qu'en appui d'étanchéité avec la deuxième surface d'étanchéité (24) de la tête de boîtier (3).

41. Filtre à air comprimé selon la revendication 40, **caractérisé en ce que** l'élément d'étanchéité (41) est agencé sous forme de joint d'étanchéité à forme spéciale (41) annulaire et périphérique.

42. Filtre à air comprimé selon la revendication 40 ou 41, **caractérisé en ce que**, au niveau de ses portions de bord, l'élément d'étanchéité (41) présente des lèvres d'étanchéité (42, 43) susceptibles de se déformer légèrement.

43. Filtre à air comprimé selon au moins une des revendications 40 à 42, **caractérisé en ce que** la portion en rebord (14) de l'élément filtrant (5) présente deux portions de fixation d'élément d'étanchéité (36, 37) qui sont de préférence chacune agencées sous forme d'une rainure de réception entourant la portion en rebord (14) pour recevoir solidement les portions de bord de l'élément d'étanchéité (41) avec une légère précontrainte radiale de l'élément d'étanchéité (41).

44. Filtre à air comprimé selon au moins une des revendications 40 à 43, **caractérisé en ce que** la portion en rebord (14) de l'élément filtrant (5) comporte plusieurs perçages (39) servant de canaux de liaison entre le deuxième canal d'écoulement (10) et la portion de réception de l'élément d'étanchéité (38).

45. Filtre à air comprimé selon au moins une des revendications 40 à 44, **caractérisé en ce que** la portion en rebord (14) de l'élément filtrant (5) comporte une portion de butée (47) qui peut entrer de manière prédéterminée en appui avec une surface d'appui (48) associée de la cloche de boîtier (4) pour une butée axiale.

46. Filtre à air comprimé selon au moins une des revendications 40 à 45, **caractérisé en ce qu'**un espace libre (40) périphérique ou subdivisé en plusieurs portions est prévu au niveau de la portion de réception de l'élément d'étanchéité (38) entre l'élément d'étanchéité (41) et la portion en rebord (14), lequel espace libre est fluidiquement en contact avec l'au moins un canal de liaison (39), l'espace libre (40) étant prévu sur le côté opposé de l'élément d'étanchéité (41), sensiblement diamétralement par rapport à l'espace à étanchéifier entre la première surface d'étanchéité (23) de la tête de boîtier (3) et la deuxième surface d'étanchéité (24) de la cloche de boîtier (4).

47. Filtre à air comprimé selon au moins une des revendications 40 à 46, **caractérisé en ce que**, quant à ses dimensions géométriques, l'élément d'étanchéité est adapté à la forme de la première surface d'étanchéité (23) de la tête de boîtier (3) et à la forme de la deuxième surface d'étanchéité (24) de la cloche de boîtier (4), de telle manière que l'élément d'étanchéité (41) est emboîtable dans l'espace à étanchéifier entre la première surface d'étanchéité (23) et la deuxième surface d'étanchéité (24) dans la position de fermeture du boîtier de filtre (2).

48. Filtre à air comprimé selon au moins une des revendications 42 à 47, **caractérisé en ce que**, quant à leurs dimensions géométriques, les lèvres d'étanchéité (42, 43) de l'élément d'étanchéité (41) sont agencées de telle manière que, dans la position de fermeture du boîtier de filtre (2), l'une des lèvres d'étanchéité (42) est en appui d'étanchéité avec respectivement la première surface d'étanchéité (23) ou une surface périphérique intérieure associée de la tête de boîtier (3) et que l'autre lèvre d'étanchéité (43) peut être mise en appui en d'étanchéité avec une surface périphérique intérieure associée de la cloche de boîtier (4), l'élément d'étanchéité (41) pouvant être soumis à une surpression de telle manière que l'élément d'étanchéité (41) peut être pressé en appui d'étanchéité renforcé contre la première surface d'étanchéité (23) et la deuxième surface d'étanchéité (24).

49. Élément filtrant (5) pour séparer des matières étrangères d'un flux d'air comprimé, comportant :
- un fond d'élément (6) ;
- une tête d'élément (7) comportant une portion en collet (13) formant un premier canal d'écoulement (9) et une portion en rebord (14) agencée pour entourer au moins par sections la portion en collet (13) et reliée à la portion en collet (13) en formant un deuxième canal d'écoulement (10) ; et
- un moyen filtrant (8) relié de manière étanche au fond d'élément (6) et à la tête d'élément (7) pour former un chemin d'écoulement gazeux entre le premier canal d'écoulement (9) et le deuxième canal d'écoulement (10) à travers le matériau filtrant (8) ;
la portion en rebord (14) comportant une surface d'appui (16), prévue au moins par sections sur le pourtour extérieur, pour recevoir un élément d'étanchéité (22) associé, de telle manière que, sans application de force supplémentaire, l'élément d'étanchéité (22) présente une extension radiale prédéterminée et, avec une force agissant sensiblement axialement à partir de la direction du fond d'élément (6) sur l'élément d'étanchéité (22), subit un élargissement radial prédéterminée du fait de l'appui de l'élément d'étanchéité (22) contre la surface d'appui (16).

50. Filtre à air comprimé (1) pour séparer des matières étrangères d'un flux d'air comprimé, comportant :
- un élément filtrant (5) agencé selon la revendication 65 ; et
- un boîtier de filtre (2) recevant de façon étanche l'élément filtrant (5), qui présente une tête de boîtier (3) comportant une première surface d'étanchéité (23), associée à l'élément d'étanchéité (22) de l'élément filtrant (5) et prévue au moins par sections sur le pourtour intérieur, et une cloche de boîtier (4) comportant une deuxième surface d'étanchéité (24), associée à l'élément d'étanchéité (22) de l'élément filtrant (5) et prévue au moins par sections sur le côté frontal,
la cloche de boîtier (4) pouvant être reliée à la tête de boîtier (3) par un mouvement de fermeture du boîtier de filtre (2) pour former une position de fermeture étanche ; et
l'élément filtrant (5) pouvant être couplé à la tête de boîtier (3) et à la cloche de boîtier (4) de telle manière que le mouvement de fermeture du boîtier de filtre (2) provoque un mouvement relatif sensiblement axial, l'une vers l'autre, entre la portion en rebord (14) de l'élément filtrant (5) et la cloche de boîtier (4), grâce auquel la deuxième surface d'étanchéité (24) de la cloche de boîtier (4) élargit radialement l'élément d'étanchéité (22) du fait de l'action de force sensiblement axiale par la deuxième surface d'étanchéité (24) et du fait de l'appui de l'élément d'étanchéité (22) contre la surface d'appui (16) de la portion en rebord (14) de l'élément filtrant (5) en appui d'étanchéité avec la première surface d'étanchéité (23) de la tête de boîtier (3).
